# EUROPÄISCHE PATENTSCHRIFT

(11) **EP 3 987 903 B1**
(45) Veröffentlichungstag und Bekanntmachung des Hinweises auf die Patenterteilung: **18.10.2023**
(21) Anmeldenummer: 21194747.8
(22) Anmeldetag: 03.09.2021
(51) Int. Cl.: A01C 7/08, A01C 7/10, A01C 7/12, A01C 17/00

(54) **PNEUMATISCHE VERTEILMASCHINE UND VERFAHREN ZUR STEUERUNG ODER REGELUNG DEREN DOSIERORGANS**
PNEUMATIC DISTRIBUTION MACHINE AND METHOD FOR CONTROLLING OR REGULATING ITS DOSING MEMBER
MACHINE À ÉPANDRE PNEUMATIQUE ET PROCÉDÉ DE COMMANDE OU DE RÉGULATION DE SES ORGANES DE DOSAGE

(30) Priorität: 26.10.2020 DE 102020128137
(43) Veröffentlichungstag der Anmeldung: 27.04.2022
(73) Patentinhaber: RAUCH Landmaschinenfabrik GmbH, 76547 Sinzheim (DE)
(72) Erfinder: Klein, Frédéric, 67000 Strasbourg (FR)
(74) Vertreter: Lichti - Patentanwälte Partnerschaft mbB

(56) Entgegenhaltungen:
- EP-B1- 2 420 121
- DE-A1-102016 012 254

## Beschreibung

Die Erfindung betrifft eine pneumatische Verteilmaschine, umfassend
- wenigstens einen Vorratsbehälter zur Aufnahme von Verteilgut mit wenigstens einer Auslassöffnung;
- wenigstens ein der Auslassöffnung des Vorratsbehälters nachgeordnetes Dosierorgan mit wenigstens einem Dosierrad mit einer Mehrzahl an Dosierzellen;
- eine mit dem Dosierorgan in Verbindung stehende Steuer- und/oder Regeleinrichtung, welche zur Steuerung und/oder Regelung der Drehzahl des Dosierrades auf einen Soll-Massenstrom an Verteilgut in Abhängigkeit wenigstens eines Parameters aus der Gruppe Soll-Verteilmenge pro Flächeneinheit, Fahrgeschwindigkeit und Arbeitsbreite ausgebildet ist;
- wenigstens eine dem Dosierorgan nachgeordnete Übergabekammer zur Überführung von mittels des Dosierorgans dosiertem Verteilgut in wenigstens eine Förderleitung;
- wenigstens ein Gebläse zur Beaufschlagung der Förderleitung mit einem Luftstrom;
- wenigstens ein der Förderleitung nachgeordnetes Verteilorgan; und
- wenigstens eine Wiegeeinrichtung mit einer Wiegekammer, welcher eine Probe eines bestimmten auszubringenden Verteilguttyps zur Kalibrierung des Dosierorgans zuführbar ist, um die Masse der in die Wiegekammer überführte Probe an Verteilgut gravimetrisch zu bestimmen.

Die Erfindung bezieht sich ferner auf ein Verfahren zur Steuerung und/oder Regelung eines Dosierorgans einer pneumatischen Verteilmaschine der vorgenannten Art.

Pneumatische Verteilmaschinen der vorgenannten Art finden in der Landwirtschaft zum Ausbringen von vornehmlich pulver- oder partikelförmigem Verteilgut, wie insbesondere Saatgut und/oder Dünger, verbreitet Verwendung. Dabei wird das in dem Vorratsbehälter auf Vorrat gehaltene Verteilgut mittels eines oder mehrerer, üblicherweise unterhalb einer Auslauföffnung des Vorratsbehälters angeordneter Dosierorgans bzw. -organe dosiert und wird der dosierte Massenstrom an Verteilgut an eine Mehrzahl an dem Dosierorgan nachgeordneten Verteilorganen überführt. Zur Überführung des Verteilgutes an die Verteilorgane dient ein Gebläse, welches die erzeugte Förderluft in eine Förderleitung einspeist, in deren Innern - und in der Regel in einem Leitungsabschnitt derselben unterhalb des Dosierorgans - sich eine Übergabekammer befindet, um den mittels des Dosierorgans dosierten Verteilgutstrom in den in der Förderleitung strömenden Förderluftstrom einzudispergieren und zu fluidisieren. Zu letztgenanntem Zweck ist die Förderleitung im Bereich der Übergabekammer häufig, wenngleich nicht notwendigerweise, mit einem sogenannten Injektor ausgestattet, welcher eine stromauf der Übergabekammer in der Förderleitung angeordnete Düse und einen stromab der Übergabekammer in der Förderleitung angeordneten Diffusor nach Art einer Expansionsdüse umfasst. Die Übergabekammer ist in diesem Fall folglich zwischen der Düse und dem Diffusor gebildet. Insbesondere im Falle von sogenannten Drillmaschinen mündet die Förderleitung stromab der Übergabekammer schließlich in eine Verteileinheit, welche beispielsweise in Form eines Verteilerkopfes ausgestaltet ist und eine Mehrzahl an Abgängen aufweist. Letztere sind in der Regel um den Umfang der Verteileinheit verteilt angeordnet und schließt sich hieran je eine Verteilerleitung an, welche dazu dient, den Verteilgutstrom in der Anzahl an Verteilerleitungen entsprechenden Teilströmen je einem Verteilorgan zuzuführen, welche je nach gewünschter Arbeitsbreite mit unterschiedlichem Seitenabstand von der Verteilmaschine angeordnet sind. Darüber hinaus sind auch andere Arten von Verteileinheiten gebräuchlich, wie z.B. in Form von Zyklonen, welche die Verteilgutpartikel aus dem Förderluftstrom abtrennen und vornehmlich bei Verteilmaschinen in Form von Einzelkornsämaschinen zum Einsatz gelangen.

Handelt es sich bei der pneumatischen Verteilmaschine beispielsweise um einen Düngerstreuer, wie er z.B. aus der DE 10 2004 030 240 B4 bekannt ist, so können die Verteilorgane beispielsweise auch von am Ende der Verteilerleitungen befindlichen Prallplatten gebildet sein. Handelt es sich hingegen bei der pneumatischen Verteilmaschine z.B. um eine Sämaschine, so können die Verteilorgane z.B. Säscharen umfassen, um das Saatgut in den Boden einzubringen. Derartige Verteilmaschinen sind unter anderem aus den DE 44 34 963 A1, DE 197 47 029 A1 oder DE 10 2010 053 883 A1 bekannt.

Der insbesondere in seinem mit dem Verteilgut befüllten Zustand schwere Vorratsbehälter ist bei bekannten pneumatischen Verteilmaschinen üblicherweise an einer Tragkonstruktion angeordnet, welche sich unterhalb des Vorratsbehälters erstreckt und diesen abstützt. Die Tragkonstruktion kann dabei entweder von einem Dreipunkt-Kraftheber einer Zugmaschine, wie eines Traktors, aufgenommen werden, oder die Verteilmaschine ist als gezogene Maschine ausgebildet, welche sich ihrerseits während des Betriebs auf dem Boden abstützt. Das Gehäuse der Übergabekammer ist insbesondere dann, wenn es mit einem Injektor ausgestattet ist, aus Platzgründen häufig quer zur Fahrtrichtung angeordnet (d.h. die Mittelachse von Düse und Diffusor des Injektors erstreckt sich senkrecht zur Fahrtrichtung). Darüber hinaus sind insbesondere für große Arbeitsbreiten sogenannte Zwillingsausführungen bekannt, welche je einen zur Aufnahme des Verteilgutes dienenden Vorratsbehälter sowie je ein pneumatisches Transportsystem der oben beschriebenen Art umfassen. Die Übergabekammer ist in diesem Fall in der Regel parallel zur Fahrtrichtung angeordnet.

Das oder die Dosierorgan(e) von pneumatischen Verteilmaschinen weisen üblicherweise Dosierräder mit einer Mehrzahl an Dosierzellen auf, welche je nach dem auszubringenden Verteilgut in der Regel von Zellen- oder Nockenräder gebildet sind und hinsichtlich ihrer Betriebsparameter, wie insbesondere der Drehzahl, mittels einer Steuer- und/oder Regeleinrichtung steuerbar und/oder regelbar sind, wobei es ferner bekannt ist, dass die Dosierräder gegeneinander austauschbar sind, um die Verteilmaschine an verschiedene Verteilgüter anzupassen (vgl. z.B. die EP 2 786 649 A2).

Um das oder die Dosierorgan(e) von gattungsgemäßen pneumatischen Verteilmaschinen auf einen gewünschten Soll-Massenstrom an Verteilgut zu regeln, beschreibt beispielsweise die DE 10 2014 115 020 A1 ein Regelverfahren, bei welchem der Ist-Massenstrom der in den Förderluftstrom eindispergierten Verteilgutpartikel in der Förderleitung mittels eines Sensors, wie eines Piezosensors, erfasst und an eine Regeleinrichtung der Verteilmaschine übermittelt wird, welche eine Stellgröße in Abhängigkeit des Soll-Massenstroms bestimmt und die Dosierorgane dementsprechend auf den Soll-Massenstrom regelt. Hierbei soll ständig ein Korrekturfaktor als Verhältnis des Ist-Massenstroms in Bezug auf die Ist-Drehzahl bzw. -frequenz des Dosierorgans ermittelt werden, so dass der Soll-Massenstrom mit Hilfe des Korrekturfaktors in eine Soll-Drehzahl bzw. -frequenz des Dosierorgans umgewandelt werden kann. Die Regeleinrichtung ermittelt die auf das Dosierorgan wirkende Stellgröße -- hier: die Drehzahl bzw. -frequenz - in Abhängigkeit von einer Regelabweichung, welche als Differenz zwischen der Soll-Drehzahl und der Ist-Drehzahl bestimmt wird. Indes haben sich derartige Verfahren auf dem Markt bislang nicht durchsetzen können, weil die sensorische Erfassung des Ist-Massenstroms an fluidisierten Verteilgutpartikeln stark fehlerbehaftet und im Übrigen auch störungsanfällig ist, wobei bereits lokale Ablagerungen und/oder Verschmutzungen zu einem Versagen der Massenstromregelung führen können.

Entsprechendes gilt für die DE 100 37 713 A1, welche eine Verteilmaschine in Form einer Drillmaschine beschreibt, die ein Dosierorgan mit einem Dosierrad in Form eines Särades umfasst, welches das dosierte Saatgut in eine unterhalb des Dosierorgans angeordnete Übergabekammer dosiert, an welche sich eine mit einem Luftstrom beaufschlagte Förderleitung anschließt. Stromab des Dosierorgans ist eine in Form einer Lichtschranke, einer Sensoreinheit oder einer Pralleinrichtung ausgebildete Zähleinrichtung vorgesehen, welche eine Teilmenge des auszubringenden Saatgutes abzählt, um die gesamte Aussaatmenge in Abhängigkeit hiervon sowie der Arbeitsgeschwindigkeit zu regeln. Neben den vorgenannten, allgemein mit einer entsprechenden Sensorik verbundenen Nachteilen stellt sich hier ferner das Problem, dass die Zähleinrichtung nur mit einer geringen Teilmenge des zu dosierenden Gesamtmassenstroms an Verteilgut beaufschlagt werden kann, damit die Verteilgutpartikel eine abzählbare Lage bilden können. Aufgrund der üblicherweise nicht linearen Abhängigkeit des dosierten Massenstroms bezogen auf die Drehzahl des Dosierorgans ergeben sich folglich Streufehler beim Ausbringen des (gesamten) Soll-Massenstroms an Verteilgut.

In der Praxis bedient man sich daher nach wie vor der Durchführung von sogenannten Abdrehproben, indem das Dosierorgan dadurch kalibriert wird, indem es mit einem bestimmten Verteilguttyp beaufschlagt und über einen vorherbestimmten Probenahmezeitraum mit einem vorherbestimmten Betriebsparameter - üblicherweise der Drehzahl des z.B. als Zellen- oder Nockenrad ausgestalteten Dosierrades - betätigt und die während der Abdrehprobe dosierte Masse an Verteilgut gravimetrisch erfasst wird. Aus der derart erhaltenen Masse an Verteilgut bezogen auf den Probenahmezeitraum und den Betriebsparameter des Dosierorgans kann sodann eine funktionale Beziehung zwischen dem Betriebsparameter des Dosierorgans und dem hiermit dosierten Massenstrom an Verteilgut errechnet und das Dosierorgan anschließend in Abhängigkeit dieser funktionalen Beziehung auf einen Soll-Massenstrom an Verteilgut gesteuert und/oder geregelt werden. Dabei ist es für eine solche Abdrehprobe essentiell, dass das gesamte, während ihrer Durchführung dosierte Verteilgut aufgefangen werden kann und nicht etwa Anteile desselben, z.B. in Bauteilen der Verteilmaschine, zurückbleiben, um für eine hohe Genauigkeit der Einstellung des Dosierorgans beim späteren Arbeitsgang des Düngens/Säens zu sorgen und auch als "Abdrehfehler" bezeichnete Fehldosierungen, insbesondere Überdosierungen, infolge anlässlich der Abdrehprobe nur teilweise aufgefangenen Verteilgutes sowohl aus wirtschaftlichen Gründen als auch aus Umweltschutzgründen zu vermeiden.

Während in vielen Fällen derartige Abdrehproben vor Beginn der Verteilarbeit manuell durchgeführt werden, indem das Dosierorgan in der obigen Weise betätigt und das während der Abdrehprobe dosierte Verteilgut in einem unterhalb des Dosierorgans zu platzierenden Probenahmebehälter aufgefangen wird, wonach der Probenahmebehälter mit der aufgefangenen Masse an Verteilgut manuell gewogen und ein die gewünschte Verteilmenge an Verteilgut pro Dosierzeit identifizierender Kennwert einer Steuereinrichtung der Verteilmaschine eingegeben wird (vgl. z.B. die EP 0 635 195 A1, DE 44 31 288 A1, EP 2 022 308 A1, DE 10 2007 044 178 A1 oder DE 20 2014 009 404 U1), ist eine solche Vorgehensweise einerseits für den Landwirt relativ aufwändig, andererseits lässt die hierdurch erzielte Dosiergenauigkeit oft zu wünschen übrig, weil sich der Ist-Massenstrom desselben Verteilgutes bei gleichbleibender Drehzahl des Dosierorgans während der fortschreitenden Verteilarbeit verändern kann, wie insbesondere infolge von Feuchtigkeit. Überdies bedeutet eine manuelle Eingabe von Werten in die Steuereinrichtung grundsätzlich eine hohe Fehleranfälligkeit.

Es sind daher auch gattungsgemäße pneumatische Verteilmaschinen bekannt, bei welchen die Abdrehproben einerseits in automatisierter Form, andererseits zu verschiedenen Zeitpunkten während der Verteilarbeit durchgeführt werden können, wie beispielsweise während des Wendens der Verteilmaschine im Vorgewende etc., um die funktionale Beziehung zwischen der Drehzahl des Dosierorgans und dem hiermit dosierten Ist-Massenstrom an Verteilgut stets aktuell zu halten und folglich für eine fortwährend hohe Dosiergenauigkeit zu sorgen. So beschreibt beispielsweise die DE 101 34 991 A1 eine pneumatische Drillmaschine mit einem Saatgutbehälter, einem in Form eines Zellenrades ausgestalteten Dosierorgan sowie einer Zähleinrichtung für die Auszählung der Verteilgutpartikel, welche anlässlich automatisierter Abdrehproben dosiert worden sind. Die Zähleinrichtung ist als pneumatische Zähleinrichtung ausgebildet und umfasst ein Zellenrad mit in dessen Außenbereich mit Abstand voneinander angeordneten Bohrungen, eine die Verteilgutpartikel in die Bohrungen saugende Ansaugeinrichtung und eine Partikelabscheideeinrichtung, welche die angesaugten Partikel aus den Bohrungen abscheidet. Zwei Sensoren, welche jeweils in Drehrichtung des Zellenrades vor und hinter der Partikelabscheideeinrichtung angeordnet sind, dienen zum Zählen der während der Abdrehprobe dosierten Verteilgutpartikel, wobei das Ergebnis dieser Zählung an eine Regeleinrichtung übermittelt wird, welche das Dosierorgan entsprechend der gewünschten Verteilung regelt. Die Zähleinrichtung ist im Innern des Saatgutbehälters angeordnet, wobei in einem zwischen dem Dosierorgan und dem Verteilerkopf angeordneten Abschnitt der Förderleitung eine Weiche vorgesehen ist, welche während der Durchführung einer Abdrehprobe die dosierten Verteilgutpartikel zu der der Zähleinrichtung umleitet, wohingegen sie diese während der Verteilarbeit der in Form eines Verteilerkopfes ausgestalteten Verteileinheit zuleitet. Abgesehen von der in konstruktiver Hinsicht aufwändigen Ausgestaltung der Partikelzähleinrichtung besteht ein Nachteil insbesondere darin, dass sich die während einer Abdrehprobe zu der Zähleinrichtung im Kreislauf geführten Verteilgutpartikeln an vielen Stellen der Verteilmaschine anreichern bzw. zurückbleiben können, wie beispielsweise im Injektor oder in der Förderleitung selbst, so dass die Gefahr von Dosierfehlern besteht, wenn nicht alle Verteilgutpartikel gezählt werden können. Überdies gestaltet sich die Abdrehprobe als relativ zeitaufwändig.

Die EP 2 420 121 B1 beschreibt eine insbesondere in Form einer Sämaschine ausgestaltete pneumatische Verteilmaschine mit einem Vorratsbehälter zur Aufnahme des Verteilgutes, einem Dosierorgan und einer unterhalb desselben angeordneten Übergabekammer mit einem Injektor, welcher in eine Förderleitung für den fluidisierten Verteilgutstrom mündet. Darüber hinaus umfasst die Verteilmaschine einen unterhalb des Injektors angeordneten Wiegebehälter, welcher zum selektiven Wiegen eines dosierten Anteils an Verteilgut aus dem Vorratsbehälter während einer Abdrehprobe dient und mittels eines Kalibrierventils mit letzterem verbunden oder von diesem getrennt werden kann. Um eine Abdrehprobe durchzuführen, wird folglich das Kalibrierventil geöffnet, so dass das mittels einer vorgegebenen Umdrehungszahl des Dosierorgans dosierte Verteilgut in den Wiegebehälter fällt, wo seine Masse mittels einer Wiegezelle gravimetrisch erfasst wird. Während der Verteilarbeit ist das Kalibrierventil hingegen geschlossen, so dass das dosierte Verteilgut von dem Dosierorgan direkt dem Injektor aufgegeben wird. Als nachteilig erweist sich insbesondere, dass das in dem Wiegebehälter aufgefangene Verteilgut nach jeder Abdrehprobe mittels einer zusätzlichen Rückführleitung, welche mit einem zusätzlichen Gebläse versehen ist, in den Vorratsbehälter rezirkuliert werden muss. Zudem sollte das Gehäuse der Übergabekammer von pneumatischen Verteilmaschinen - sei es mit einem Injektor ausgestattet oder nicht - zur Erzielung eines möglichst geringen Schwerpunktes der Maschine und den Bestrebungen dahingehend, dem Vorratsbehälter ein möglichst großes Fassungsvermögen zu verleihen, grundsätzlich auf einem sehr tiefen Höhenniveau unterhalb des Dosierorgans angeordnet sein, was mit dem unterhalb des Injektors vorgesehenen Wiegebehälter einschließlich dessen Rückführleitung nur bedingt möglich ist. Um die Arbeitsgänge des Düngens und/oder Säens mit Arbeitsgängen der Bodenbearbeitung platzsparend miteinander kombinieren zu können, sind gattungsgemäße pneumatische Verteilmaschinen, insbesondere in Form sogenannter Drillmaschinen, ferner häufig mit aktiven oder passiven Bodenbearbeitungsgeräten, wie z.B. Packerwalzen, Kreiseleggen und dergleichen, ausgestattet, was den für den Wiegebehälter erforderlichen Bauraum zusätzlich einschränkt.

Aus der DE 10 2016 012 254 A1 ist schließlich eine weitere gattungsgemäße Verteilmaschine bekannt, bei welcher automatisierte Abdrehproben dadurch durchgeführt werden können, indem das mit einem bestimmten Verteilguttyp beaufschlagte Dosierrad des Dosierorgans über einen vorherbestimmten Probenahmezeitraum mit einer vorherbestimmten Drehzahl betätigt und die während der Abdrehprobe dosierte Masse an Verteilgut in einer Wiegekammer gravimetrisch erfasst wird, wonach aus der derart erhaltenen Masse an Verteilgut bezogen auf den Probenahmezeitraum und die Drehzahl des Dosierrades eine funktionale Beziehung zwischen der Drehzahl des Dosierrades des Dosierorgans und dem hiermit dosierten Ist-Massenstrom an Verteilgut errechnet und das Dosierorgan sodann in Abhängigkeit dieser funktionalen Beziehung auf einen Soll-Massenstrom an Verteilgut gesteuert bzw. geregelt wird. Da die Wiegekammer stromab des Dosierorgans und stromauf der Übergabekammer oder in der Übergabekammer selbst angeordnet ist, kann das anlässlich der Abdrehprobe dosierte Verteilgut an die Förderleitung übergeben und ausgebracht werden, ohne in den Vorratsbehälter zurückgeführt zu werden. Während sich eine solche Ausgestaltung in der Praxis gut bewährt hat, besteht ein grundsätzlicher Nachteil bei der Durchführung von Abdrehproben darin, dass eine nicht unerhebliche Menge an Verteilgut abfällt, was entweder in konstruktiv aufwändiger Weise zurückgeführt oder ausgebracht werden muss.

Der Erfindung liegt die Aufgabe zugrunde, eine pneumatische Verteilmaschine sowie ein Verfahren zur Steuerung und/oder Regelung deren Dosierorgans der eingangs genannten Art unter zumindest weitestgehender Vermeidung der vorgenannten Nachteile dahingehend weiterzubilden, dass eine einfache und schnelle, automatisierte Kalibrierung des Dosierorgans mit hoher Genauigkeit möglich ist, ohne mittels des Dosierorgans selbst Abdrehproben durchführen zu müssen.

Erfindungsgemäß wird diese Aufgabe bei einer pneumatischen Verteilmaschine der eingangs genannten Art dadurch gelöst, dass die Wiegekammer der Wiegeeinrichtung mit wenigstens einem Sensor zur Erfassung des Volumens der ihr zugeführten Probe an Verteilgut ausgestattet ist, dass die Steuer- und/oder Regeleinrichtung zur Ermittlung des spezifischen Gewichtes des Verteilgutes einerseits aus dem sensorisch ermittelten Volumen der Probe an Verteilgut in der Wiegekammer, andererseits aus der mittels der Wiegeeinrichtung gravimetrisch ermittelten Masse der in die Wiegekammer überführten Probe an Verteilgut ausgebildet ist, und dass in der Steuer- und/oder Regeleinrichtung zumindest ein für das Aufnahmevolumen und die Anzahl von Dosierzellen des Dosierrades repräsentativer Wert hinterlegt ist, wobei die Steuer- und/oder Regeleinrichtung zur Steuerung und/oder Regelung der Drehzahl des Dosierrades des Dosierorgans auf den Soll-Massenstrom an Verteilgut anhand der aus dem derart ermittelten spezifischen Gewicht des Verteilgutes ermittelten Masse an Verteilgut pro Dosierzelle oder pro Gruppe von Dosierzellen des Dosierrades ausgebildet ist.

In verfahrenstechnischer Hinsicht sieht die Erfindung zur Lösung dieser Aufgabe ferner ein Verfahren zur Steuerung und/oder Regelung eines Dosierorgans einer pneumatischen Verteilmaschine der eingangs genannten Art vor, welches durch die folgenden Schritte gekennzeichnet, ist:
(a) Überführen einer Probe an Verteilgut in die Wiegekammer der Wiegeeinrichtung;
(b) sensorisches Erfassen des Volumens der in die Wiegekammer der Wiegeeinrichtung überführten Probe an Verteilgut;
(c) gravimetrisches Bestimmen der Masse der in die Wiegekammer überführten Probe an Verteilgut mittels der Wiegeeinrichtung;
(d) Ermitteln des spezifischen Gewichtes des Verteilgutes einerseits aus dem sensorisch ermittelten Volumen der Probe an Verteilgut in der Wiegekammer, andererseits aus der mittels der Wiegeeinrichtung gravimetrisch ermittelten Masse der in die Wiegekammer überführten Probe an Verteilgut; und
(e) Steuern und/oder Regeln der Drehzahl des Dosierrades des Dosierorgans mittels der Steuer- und/oder Regeleinrichtung, in welcher zumindest ein für das Aufnahmevolumen und die Anzahl von Dosierzellen des Dosierrades repräsentativer Wert hinterlegt wird, auf den Soll-Massenstrom an Verteilgut anhand der mittels des derart ermittelten spezifischen Gewichtes des Verteilgutes ermittelten Masse an Verteilgut pro Dosierzelle oder pro Gruppe von Dosierzellen des Dosierrades.

Die erfindungsgemäße Ausgestaltung macht es möglich, dass zu Beginn der Verteilarbeit anstelle der Durchführung einer Abdrehprobe, bei welcher notwendigerweise die abgedrehte Menge an Verteilgut anfällt, die entweder in den Vorratsbehälter zurückgeführt, ausgebracht oder z.B. im Falle von eingetragenen Verunreinigungen gar verworfen werden muss, das spezifische Gewicht, also die Dichte, des jeweiligen Verteilguttyps ermittelt werden kann, woraufhin das Dosierrad des Dosierorgans, von welchem zumindest ein für das Aufnahmevolumen und die Anzahl von Dosierzellen des Dosierrades repräsentativer Wert in der Steuer- und/oder Regeleinrichtung hinterlegt ist (also z.B. das Volumen und die Anzahl der Dosierzellen oder Gruppen der Dosierzellen, das Volumen und die Umfangsabmessungen der Dosierzellen oder Gruppen der Dosierzellen etc.), anlässlich der Verteilarbeit anhand der mittels des auf diese Weise ermittelten spezifischen Gewichtes des Verteilgutes ermittelten Masse an Verteilgut pro Dosierzelle oder pro Gruppe von Dosierzellen des Dosierrades entsprechend dem Soll-Massenstrom an Verteilgut in Rotation versetzt wird.

Zur Kalibrierung des Dosierrades des Dosierorgans wird demnach gemäß Schritt (a) des erfindungsgemäßen Verfahrens zunächst eine Probe an Verteilgut in die Wiegekammer der Wiegeeinrichtung überführt. Das Volumen dieser Probe an Verteilgut wird in dem darauffolgenden Schritt (b) einerseits sensorisch erfasst, wobei als geeignete, der Wiegekammer zugeordnete Sensoren beliebige, aus dem Stand der Technik zur Volumenerfassung bekannte Sensoren zum Einsatz gelangen können, wie beispielsweise kapazitive Sensoren, optische Sensoren, Füllstandsensoren und dergleichen. Andererseits wird die Masse der in die Wiegekammer überführten Probe an Verteilgut gemäß Schritt (c) mittels der Wiegeeinrichtung gravimetrisch bestimmt, so dass aus dem Volumen und der Masse der Probe an Verteilgut gemäß Schritt (d) das spezifische Gewicht bzw. die Dichte des jeweiligen Verteilguttyps ermittelt werden kann. Sodann wird gemäß Schritt (e) die Drehzahl des Dosierrades des Dosierorgans mittels der Steuer- und/oder Regeleinrichtung, in welcher zumindest ein für das Aufnahmevolumen und die Anzahl von Dosierzellen des Dosierrades repräsentativer Wert in der Steuer- und/oder Regeleinrichtung hinterlegt worden ist, anhand der mittels des auf diese Weise ermittelten spezifischen Gewichtes bzw. der Dichte des Verteilgutes ermittelten Masse an Verteilgut pro Dosierzelle oder pro Gruppe von Dosierzellen des Dosierrades entsprechend dem Soll-Massenstrom an Verteilgut gesteuert und/oder geregelt.

Soll also beispielsweise ein Massenstrom von x g/s eines bestimmten Verteilguttyps, welcher z.B. in üblicher Weise durch Eingabe der Soll-Verteilmenge pro Flächeneinheit in die Steuer- und/oder Regeleinrichtung unter Berücksichtigung der Fahrgeschwindigkeit und der gewünschten Arbeitsbreite (im Falle einer Teilbreitenschaltung der aktiven Teilbreiten) ermittelt wird, mittels einer erfindungsgemäßen pneumatischen Verteilmaschine ausgebracht werden, und besitzt das jeweilige Dosierrad des Dosierorgans insgesamt y Dosierzellen (entsprechend y/360 an Umdrehungen des Dosierrades, um eine jeweilige Dosierzelle zu entleeren) mit einem Aufnahmevolumen von jeweils z 1, so kann aus dem in der obigen Weise ermittelten spezifischen Gewicht bzw. aus der Dichte des jeweiligen Verteilguttyps das Aufnahmevolumen einer jeweiligen Dosierzelle des Dosierrades in eine, in einer jeweiligen Dosierzelle aufgenommene Masse des Verteilguttyps umgerechnet werden, wobei der mittels des Dosierorgans dosierte Massenstrom an Verteilgut bei einer bestimmten Drehzahl des Dosierrades der Anzahl an den Dosierauslass des Dosierorgans passierenden Dosierzellen, multipliziert mit dem Aufnahmevolumen der Dosierzellen und dem spezifischen Gewicht (bzw. der Dichte) des Verteilgutes pro Zeit entspricht. Zum Erreichen des Soll-Massenstromes an Verteilgut wird das Dosierrad dann mit einer entsprechenden Drehzahl rotiert, bei welcher die jeweiligen, in den Dosierzellen des Dosierrades geförderten Teilmassen sukzessive aus den jeweiligen Dosierzellen dosiert werden.

Sofern das Dosierorgan über eine Mehrzahl an unabhängig voneinander drehangetriebenen Dosierrädern verfügt, seien sie einzeln oder gruppenweise aktivierbar/deaktivierbar und/oder seien sie einzeln oder gruppenweise mit unterschiedlichen Rotationsgeschwindigkeiten in Drehung versetzbar, wie es als solches beispielsweise aus der DE 10 2017 005 094 A1 bekannt ist, macht es die Erfindung selbstverständlich auch möglich, dass die Drehzahl einzelner Dosierräder oder Gruppen von Dosierrädern unabhängig voneinander gemäß dem jeweils vorgesehenen Soll-Massenstrom an Verteilgut gesteuert und/oder geregelt wird, um beispielsweise verschiedene Teilbreiten mit unterschiedlichen Applikationsmengen an Verteilgut zu versorgen.

Sofern das Dosierorgan der Verteilmaschine eine Mehrzahl an verschiedenen Dosierrädern mit unterschiedlichen, an verschiedenartige Verteilgüter angepassten Dosierzellen, z.B. in Form von verschiedenen Nocken- oder Zellenrädern oder dergleichen, umfasst, welche z.B. einzeln und/oder gruppenweise aktivierbar und deaktivierbar oder gegeneinander austauschbar sein können, wie es beispielsweise aus der DE 10 2018 006 660 A1 als solches bekannt ist, so können in der Steuer- und/oder Regeleinrichtung zweckmäßigerweise eine Mehrzahl an für das Aufnahmevolumen und die Anzahl der jeweiligen Dosierzellen der verschiedenen Dosierräder repräsentativen Werte hinterlegt sein, wobei die Steuer- und/oder Regeleinrichtung den/die für das Aufnahmevolumen und die Anzahl von Dosierzellen des/der aktuell in Betrieb befindlichen Dosierrades/Dosierräder repräsentativen Wert(e) bei der Steuerung und/oder Regelung der Drehzahl des Dosierrades/der Dosierräder auf den Soll-Massenstrom an Verteilgut berücksichtigt. Um der Steuer- und/oder Regeleinrichtung in einem solchen Fall "mitzuteilen", welches Dosierrad oder welche Dosierräder des Dosierorgans sich gerade in Betrieb befinden, kann beispielsweise vorgesehen sein, dass eine für die Art und/oder für die Anzahl an aktuell in Betrieb befindlichen Dosierrädern repräsentative Information mittels manueller Eingaben in eine Eingabeeinrichtung der Steuer- und/oder Regeleinrichtung an letztere übermittelt wird. Stattdessen kann eine solche Information insbesondere auch in automatisierter Weise an die Steuer- und/oder Regeleinrichtung übermittelt werden, indem verschiedene Dosierräder des Dosierorgans und/oder diese bedarfsweise verschließende Absperrorgane beispielsweise mit einem maschinenlesbaren Code versehen sind, welcher z.B. auf einem RFID-Transponder abgespeichert ist und von einem RFID-Lesegerät der Verteilmaschine an die Steuer- und/oder Regeleinrichtung übermittelt wird. In ähnlicher Weise können die jeweils in Betrieb befindlichen (oder die außer Betrieb befindlichen) Dosierräder des Dosierorgans und/oder diese bedarfsweise verschließende Absperrorgane beispielsweise sensorisch erfasst und an die Steuer- und/oder Regeleinrichtung übermittelt werden.

In verfahrenstechnischer Hinsicht kann in diesem Zusammenhang folglich vorgesehen sein, dass in der Steuer- und/oder Regeleinrichtung eine Mehrzahl an Werten hinterlegt wird, welche für das Aufnahmevolumen und die Anzahl von Dosierzellen verschiedener Dosierräder des eine Mehrzahl an verschiedenen, insbesondere einzeln und/oder gruppenweise aktivierbaren und deaktivierbaren oder gegeneinander austauschbaren, Dosierrädern umfassenden Dosierorgans repräsentativ sind, wobei die Steuer- und/oder Regeleinrichtung den/die für das Aufnahmevolumen und die Anzahl von Dosierzellen des/der aktuell in Betrieb befindlichen Dosierrades/Dosierräder repräsentativen Wert(e) bei der Steuerung und/oder Regelung der Drehzahl des Dosierrades/der Dosierräder auf den Soll-Massenstrom an Verteilgut berücksichtigt.

Um anlässlich der Kalibrierung des Dosierorgans für eine einfache Überführung der Probe an Verteilgut in die Wiegekammer der Wiegeeinrichtung zu sorgen und etwaige hierfür vorgesehene, zusätzliche Fördereinrichtungen entbehrlich zu machen, kann die Wiegekammer der Wiegeeinrichtung einer erfindungsgemäßen pneumatischen Verteilmaschine vorzugsweise stromab der Auslassöffnung des Vorratsbehälters angeordnet sein, wobei die Wiegekammer der Wiegeeinrichtung insbesondere unterhalb der Auslassöffnung des Vorratsbehälters angeordnet ist, um in dem Vorratsbehälter bevorratetes Verteilgut infolge Gravitation in die Wiegekammer zu überführen.

In verfahrenstechnischer Hinsicht ist es auf diese Weise möglich, das Verteilgut gemäß Schritt (a), insbesondere infolge Gravitation, aus der Auslassöffnung des Vorratsbehälters in die Wiegekammer der Wiegeeinrichtung zu überführen, um von der Probe an Verteilgut dort gemäß den Schritten (b) und (c) das Volumen und die Masse zu erfassen und hieraus das spezifische Gewicht bzw. die Dichte des jeweiligen Verteilguttyps zu errechnen.

Aus entsprechenden Gründen ist in der erfindungsgemäßen pneumatischen Verteilmaschine die Wiegekammer der Wiegeeinrichtung stromauf des Dosierorgans angeordnet, wobei die Wiegekammer der Wiegeeinrichtung oberhalb einem Dosiereinlass des Dosierorgans angeordnet ist, um in der Wiegekammer befindliches Verteilgut infolge Gravitation an das Dosierorgan zu überführen. Die Wiegekammer der Wiegeeinrichtung kann folglich vorzugsweise stromab der Auslauföffnung des Vorratsbehälters und stromauf dem Dosierorgan auf einem Höhenniveau zwischen denselben angeordnet sein.

In verfahrenstechnischer Hinsicht ist es somit möglich, dass das Verteilgut, insbesondere infolge Gravitation, von der Wiegekammer der Wiegeeinrichtung in das - sodann mit einer Drehzahl entsprechend dem gewünschten Soll-Massenstrom an Verteilgut rotierte - Dosierrad des Dosierorgans überführt wird, nachdem in der Wiegekammer gemäß den Schritten (b) und (c) das Volumen und die Masse der Probe an Verteilgut erfasst und hieraus das spezifische Gewicht bzw. die Dichte des jeweiligen Verteilguttyps errechnet worden ist.

Die Wiegekammer der Wiegeeinrichtung der Verteilmaschine weist zweckmäßigerweise einen verschließbaren Einlass auf, welcher insbesondere mittels eines Schiebers verschlossen bzw. geöffnet werden kann. Der Schieber kann insbesondere anlässlich der Durchführung einer Kalibrierung vorzugsweise fernsteuerbar bzw. automatisch motorisch betätigbar sein.

In verfahrenstechnischer Hinsicht kann in diesem Fall vorgesehen sein, dass die Probe an Verteilgut gemäß Schritt (a) aus der Auslassöffnung des Vorratsbehälters in einen Einlass der Wiegekammer der Wiegeeinrichtung überführt wird, wonach der Einlass der Wiegekammer, insbesondere mittels eines Schiebers, verschlossen wird, wonach das Volumen der in die Wiegekammer der Wiegeeinrichtung überführten Probe an Verteilgut gemäß Schritt (b) sensorisch erfasst und deren Masse gemäß Schritt (c) mittels der Wiegeeinrichtung gravimetrisch bestimmt wird.

Die Wiegekammer der Wiegeeinrichtung kann auf diese Weise während des Normalbetriebs der Verteilmaschine - d.h. bei geöffnetem Schieber - von dem aus der Auslassöffnung des Vorratsbehälters in das Dosierorgan überführten Verteilgut durchströmt werden.

Darüber hinaus kann gemäß einer in konstruktiver Hinsicht vorteilhaften Ausgestaltung vorgesehen sein, dass die Wiegekammer, das Dosierorgan und die Übergabekammer eine gemeinsame Baueinheit bilden, welche einerseits von dem Vorratsbehälter (sowie selbstverständlich auch von dem diesen tragenden Grundrahmen der Verteilmaschine), andererseits von der Förderleitung mechanisch entkoppelt ist, wobei die Wiegeeinrichtung zur gravimetrischen Bestimmung der Masse der aus der Wiegekammer, dem Dosierorgan und der Übergabekammer gebildeten Baueinheit mit der in die Wiegekammer überführten Probe an Verteilgut ausgebildet ist. Die aus den vorgenannten Komponenten gebildete Baueinheit, deren Gesamtmasse mittels der Wiegeeinrichtung erfasst wird, lässt sich dabei in einfacher Weise von den übrigen Komponenten der Verteilmaschine mechanisch entkoppeln, indem die Übergabekammer z.B. mittels nachgiebiger Schlauchelemente an die Förderleitung angeschlossen ist. Entsprechendes kann für den Anschluss des Dosierorgans an die Auslassöffnung des Vorratsbehälters gelten. Stattdessen kann ein der Auslassöffnung des Vorratsbehälters zugewandter Dosiereinlass des Dosierorgans beispielsweise auch unter einem, vorzugsweise geringen, Abstand von der Auslassöffnung des Vorratsbehälters angeordnet sein, wobei dieser Abstand z.B. von einer um den Umfang der Auslassöffnung des Vorratsbehälters angeordneten Manschette umgeben sein kann, um von der Auslassöffnung in den Dosiereinlass des Dosierorgans herabfallendes Verteilgut vor äußeren Einwirkungen zu schützen.

Das sensorische Erfassen des Volumens der in die Wiegekammer der Wiegeeinrichtung überführten Probe an Verteilgut gemäß Schritt (b) und das gravimetrische Bestimmen der Masse der in die Wiegekammer überführten Probe an Verteilgut mittels der Wiegeeinrichtung gemäß Schritt (c) kann sukzessive oder vorzugsweise im Wesentlichen gleichzeitig erfolgen, um für eine nur sehr kurze Zeitdauer des Kalibriervorgangs zu sorgen.

Darüber hinaus kann zum Zwecke eine größtmöglichen Genauigkeit einerseits der Erfassung des Volumens der Probe an Verteilgut gemäß Schritt (b), andererseits der Ermittlung der Masse der Probe an Verteilgut gemäß Schritt (c) vorzugsweise jeweils die Durchführung einer Differenzmessung vorgesehen sein. Demgemäß kann zum sensorischen Erfassen des Volumens der in die Wiegekammer der Wiegeeinrichtung überführten Probe an Verteilgut gemäß Schritt (b) beispielsweise zunächst das Leervolumen und/oder das Füllvolumen der Wiegekammer sensorisch erfasst werden, wonach die Probe an Verteilgut in die Wiegekammer überführt und das verbleibende Leervolumen und/oder das Füllvolumen der mit der Probe an Verteilgut befüllten Wiegekammer sensorisch erfasst wird, wonach das Volumen der Probe an Verteilgut aus der Differenz dieser Leer- und/oder Füllvolumina der Wiegekammer errechnet wird. Alternativ oder insbesondere zusätzlich kann zum gravimetrischen Bestimmen der Masse der in die Wiegekammer überführten Probe an Verteilgut mittels der Wiegeeinrichtung gemäß Schritt (c) zunächst die "leere" Wiegekammer mittels der Wiegeeinrichtung gewogen werden, wonach die Probe an Verteilgut in die Wiegekammer überführt und die mit der Probe an Verteilgut befüllte Wiegekammer mittels der Wiegeeinrichtung gewogen wird, wonach die Masse der Probe an Verteilgut aus der Differenz dieser Wiegungen errechnet wird. Auf diese Weise wird das Messergebnis aufgrund von gegebenenfalls vor der Durchführung der Kalibrierung in der noch "leeren" Wiegekammer zurückgebliebener Verteilgutreste nicht verfälscht.

Während die vorstehend beschriebene Kalibrierung des Dosierorgans selbstverständlich in regelmäßigen Zeitabständen wiederholt werden kann (z.B. während des Wendens der Verteilmaschine im Vorgewende), um einer möglichen Veränderung der physikalischen Parameter des Verteilgutes, wie beispielsweise infolge Feuchtigkeitsexposition, zu begegnen, macht es die erfindungsgemäße Ausgestaltung der pneumatischen Verteilmaschine insbesondere auch möglich, in automatisierter Weise, z.B. ebenfalls in regelmäßigen Zeitabständen, Abdrehproben durchzuführen, indem eine Probe an Verteilgut mittels des Dosierrades des Dosierorgans abgedreht wird.

Zum Nachkalibrieren des Dosierorgans, insbesondere in periodischen Zeitabständen, kann dementsprechend ferner vorgesehen sein, dass
(A) eine Probe an Verteilgut in die Wiegekammer der Wiegeeinrichtung überführt wird (was beispielsweise in der obigen Weise infolge Gravitation geschehen kann, indem die Probe an Verteilgut aus der Auslassöffnung des Vorratsbehälters in die Wiegekammer überführt wird);
(B) die Masse des in die Wiegekammer der Wiegeeinrichtung überführten Probe an Verteilgut mittels der Wiegeeinrichtung gravimetrisch bestimmt wird (was wiederum in der obigen Weise geschehen kann, nachdem der Einlass der Wiegekammer, z.B. mittels des Schiebers, verschlossen worden ist);
(C) das Dosierrad des Dosierorgans über einen vorherbestimmten Kalibrierzeitraum mit der zuvor ermittelten Drehzahl entsprechend dem Soll-Massenstrom an Verteilgut rotiert wird, um die Probe an Verteilgut oder auch nur einen Anteil derselben abzudrehen;
(D) sodann die in der Wiegekammer der Wiegeeinrichtung verbliebene Masse an Verteilgut mittels der Wiegeeinrichtung gravimetrisch bestimmt wird;
(E) aus der Differenz dieser gravimetrisch ermittelten Massen an Verteilgut bezogen auf den Kalibrierzeitraum ein Ist-Massenstrom an Verteilgut mittels der Steuer- und/oder Regeleinrichtung errechnet wird;
(F) der derart errechnete Ist-Massenstrom mit dem Soll-Massenstrom an Verteilgut mittels der Steuer- und/oder Regeleinrichtung verglichen wird; und
(G) im Falle einer Abweichung des derart errechneten Ist-Massenstromes an Verteilgut von dem Soll-Massenstrom die Drehzahl des Dosierrades auf den Soll-Massenstrom an Verteilgut gesteuert und/oder geregelt wird.

Der der Wiegekammer der Wiegeeinrichtung zugeordnete Sensor zur Erfassung des Volumens der in der Wiegekammer befindlichen Probe an Verteilgut wird in diesem Falle nicht benötigt und erfolgt die Nachkalibrierung des Dosierorgans in diesem Fall entsprechend dem als solchen bekannten Grundprinzip des Vergleichs eines Ist-Massenstroms an Verteilgut bei einer bestimmten Drehzahl des Dosierrades des Dosierorgans über einen bestimmten Zeitraum mit dem Soll-Massenstrom an Verteilgut.

Die obigen Schritte (A) bis (G) können zum Nachkalibrieren des Dosierorgans erforderlichenfalls so oft wiederholt werden, bis der derart errechnete Ist-Massenstrom an Verteilgut dem Soll-Massenstrom entspricht oder von letzterem um nicht mehr als ein vorherbestimmter Maximalwert abweicht.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Ansicht einer Ausführungsform einer nach Art einer Drillmaschine ausgestalteten pneumatischen Verteilmaschine von deren Heck aus betrachtet;
- Fig. 2: eine schematische perspektivische Ansicht der in Form eines Verteilerkopfes ausgestalteten Verteileinheit der Verteilmaschine gemäß Fig. 1 einschließlich des Dosierorgans, des Gehäuses der Übergabekammer und der pneumatischen Förderkomponenten;
- Fig. 3: eine schematische, teilweise geschnitten dargestellte Detailansicht einer Ausführungsform einer Übergabekammer der Verteilmaschinegemäß Fig. 1 und 2, welche zwischen der Düse und dem Diffusor eines Injektors gebildet ist, aber ohne das Dosierorgan;
- Fig. 4: eine stark schematisierte Funktionsdarstellung einer Ausführungsform einer zwischen einer Auslassöffnung des Vorratsbehälters und dem Dosierorgan angeordneten Wiegekammer einer Wiegeeinrichtung der Verteilmaschine gemäß Fig. 1 bis 3;
- Fig. 5A bis 5C: jeweils eine der Fig. 4 entsprechende Ansicht zu verschiedenen Stadien während der Kalibrierung des Dosierorgans; und
- Fig. 6A bis 6D: jeweils eine der Fig. 4 entsprechende Ansicht zu verschiedenen Stadien während der Nachkalibrierung des Dosierorgans mittels Abdrehproben.

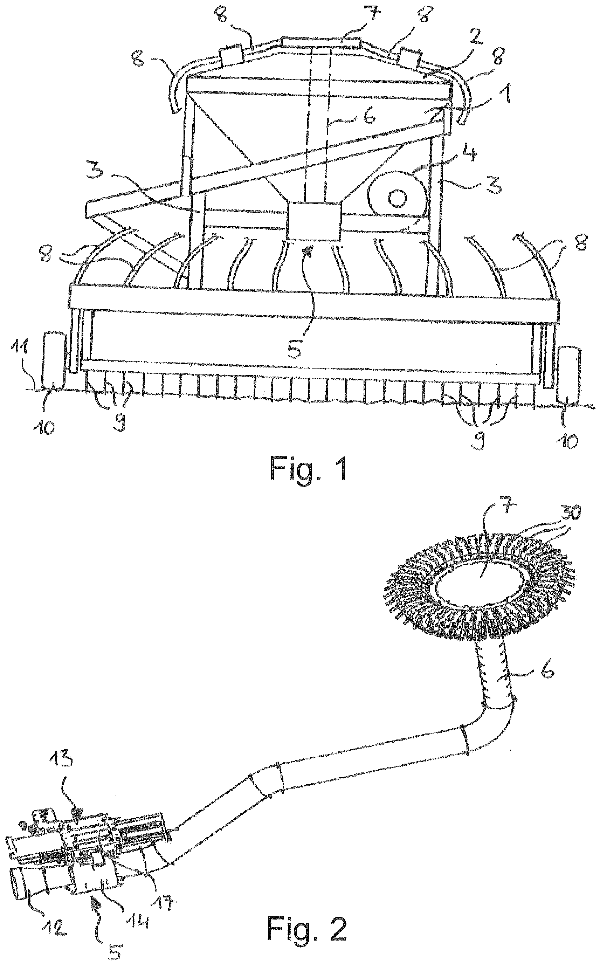

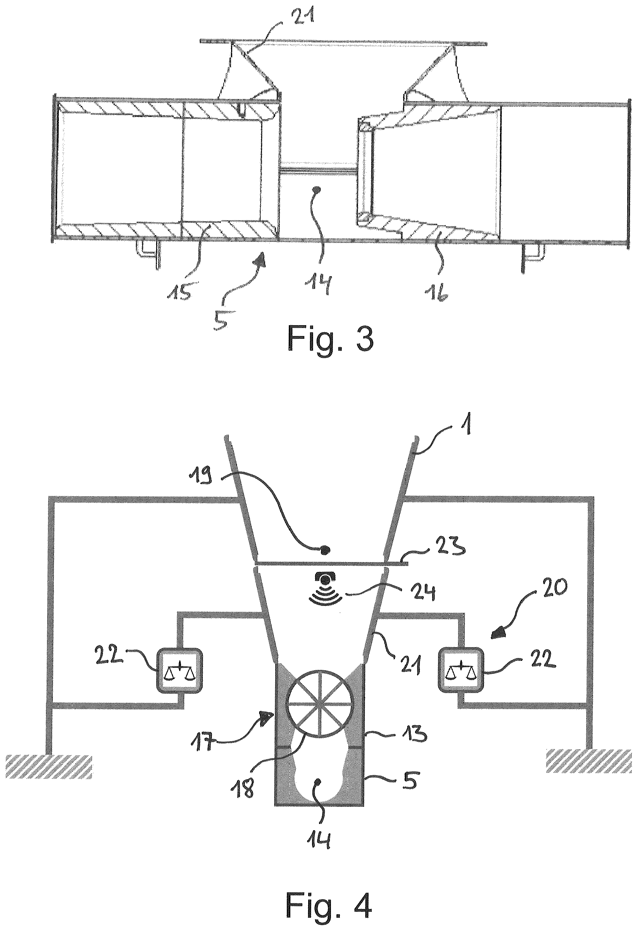

In der Fig. 1 ist ein Ausführungsbeispiel einer pneumatischen Verteilmaschine schematisch wiedergegeben, welche im vorliegenden Fall nach Art einer Sä- oder Drillmaschine ausgestaltet ist und beispielsweise an einem üblichen Dreipunkgestänge einer Zugmaschine, wie eines Traktors, lösbar festgelegt werden kann. Sie umfasst einen Vorratsbehälter 1 zur Aufnahme von Verteilgut, wie z.B. Saatgut und/oder Dünger, mit einer Abdeckung 2, welche an Stützen 3 eines Rahmens getragen sind. An letzterem ist ferner ein Gebläse 4 zur Erzeugung eines Luftstroms festgelegt. Unterhalb einer Auslauföffnung des etwa trichterförmig nach unten zulaufenden Vorratsbehälters 1 befindet sich ein in der Fig. 2 sowie insbesondere in der Fig. 3 besser erkennbares Gehäuse 5 einer Übergabekammer 14, welche zur Überführung des Verteilgutes an eine Förderleitung 6 dient. Letztere ist von dem Gebläse 4 mit einem Luftstrom beaufschlagt, um das Verteilgut nach oben in eine Verteileinheit 7 zu fördern. Die Verteileinheit 7 ist im vorliegenden Fall von einem Verteilerkopf gebildet und umfasst eine Mehrzahl an um dessen Umfang verteilt angeordneten, sich im vorliegenden Fall etwa radial nach außen erstreckenden Anschlüssen, an welche je eine Verteilerleitung 8 angeschlossen ist. Der Anschluss der Verteilerleitungen 8 kann beispielsweise mittels je eines Gehäuses 30 (vgl. die Fig. 2) geschehen, welches zweckmäßigerweise mit je einem Absperrorgan zum bedarfsweisen Unterbrechen des fluidisierten Verteilgutstromes ausgestattet ist, um verschiedene Arbeitsbreiten oder auch Teilbreitenschaltungen vorsehen zu können. Die von dem Verteilerkopf der Verteileinheit 7 abgehenden Verteilerleitungen 8, welche z.B. nach Art von Schläuchen ausgebildet sein können und in der Fig. 1 aus Übersichtlichkeitsgründen abgebrochen dargestellt sind, sind im Wesentlichen nach unten und hinten geführt, wobei sie an ihren freien, der Verteileinheit 7 abgewandten Enden mit Verteilorganen versehen sind. Im Falle der in Fig. 1 exemplarisch gezeigten Sämaschine handelt es sich bei diesen Verteilorganen z.B. um nicht im Einzelnen erkennbare Säscharen mit stromab derselben angeordneten Zustreichern 9, sogenannten Striegeln. Der Rahmen der Verteilmaschine kann im Übrigen über Stützräder 10 auf dem Boden 11 abgestützt und insbesondere von diesen angehoben werden.

Die Fig. 2 zeigt die pneumatischen Förderkomponenten der Verteilmaschine gemäß Fig. 1, welche zur Überführung des Verteilgutes von der im Innern des Gehäuses 5 befindlichen Übergabekammer 14 in die nach Art eines Verteilerkopfes ausgestaltete Verteileinheit 7 mittels der Förderleitung 6 dienen. Letztere weist an ihrem der Verteileinheit 7 abgewandten Ende einen Anschlussstutzen 12 zur fluidischen Kontaktierung des Gebläses 4 (siehe Fig. 1) auf, wobei stromab des Anschlussstutzens 12 der Auslass des Dosiergehäuses 13 eines weiter unten näher beschriebenen und mit dem Bezugszeichen 17 versehenen Dosierorgans in die Übergabekammer 14, welche von der Förderleitung 6 durchquert ist, einmündet. Von dort gelangt das in den Luftstrom eindispergierte Verteilgut zunächst über einen etwa horizontalen Abschnitt der Förderleitung 6 in einen Steigrohrabschnitt derselben, welche von unten in das Zentrum des Verteilerkopfes der Verteileinheit 7 einmündet, um dessen Umfang herum die radialen Anschlüsse für die Gehäuse 30 angeordnet sind, an welche sich wiederum je eine, in der Fig. 2 nicht nochmals zeichnerisch dargestellte Verteilerleitung 8 anschließt.

Wie weiterhin der Fig. 2 und insbesondere der Fig. 3 zu entnehmen ist, ist im Innern des Gehäuses 5 der unterhalb des Dosiergehäuses 13 angeordneten Übergabekammer 14, welche im vorliegenden Fall z.B. quer zur Fahrtrichtung von der Förderleitung 6 durchsetzt ist, einerseits eine Düse 15, andererseits ein nach Art einer Expansionsdüse ausgestalteter Diffusor 16 eines Injektors untergebracht, welche koaxial und z.B. senkrecht zur Fahrtrichtung der Verteilmaschine am tiefsten Punkt derselben angeordnet sind. Die Übergabekammer 14 befindet sich dabei in dem Zwischenraum zwischen der Düse 15 und dem Diffusor 16 des Injektors. Während die Düse 15 des Injektors an dem in Fig. 2 linken Ende des Gehäuses 5 der Übergabekammer 14 an das Gebläse 4 (siehe Fig. 1) angeschlossen ist, schließt sich an den Diffusor 16 des Injektors an dem in Fig. 2 rechten Ende des Gehäuses 5 der Übergabekammer 14 die Förderleitung 6 an. Auf diese Weise wird das Verteilgut, nachdem es mittels des Dosierorgans 17 in einem gewünschten Massenstrom dosiert worden ist, in der zwischen der Düse 15 und dem Diffusor 16 des Injektors angeordneten Übergabekammer 14 mittels des über die Düse 15 einströmenden Gasstroms in den Diffusor 16 überführt und gelangt von dort in die Förderleitung 6.

Die in den Fig. 1 bis 3 wiedergegebene Verteilmaschine ist darüber hinaus mit einer nicht zeichnerisch dargestellten Steuer- und/oder Regeleinrichtung ausgestattet, welche die funktionellen Komponenten der Verteilmaschine steuert und/oder regelt und unter anderem mit einer weiter unten unter Bezugnahme auf die Fig. 4 ff im Einzelnen erläuterten Wiegeeinrichtung 20 in Wirkverbindung steht, welcher eine Probe eines bestimmten auszubringenden Verteilguttyps zur Kalibrierung des Dosierorgans 17 zuführbar ist, um die Masse der Probe an Verteilgut gravimetrisch zu erfassen. Die Steuer- und/oder Regeleinrichtung steht überdies mit dem Dosierorgan 17 in Wirkverbindung, um das Dosierorgan 17 in Abhängigkeit der gewünschten Soll-Verteilmenge pro Flächeneinheit, der Fahrgeschwindigkeit der Verteilmaschine und der eingestellten Arbeitsbreite auf den gewünschten Soll-Massenstrom an Verteilgut zu steuern und/oder zu regeln.

Wie insbesondere aus der Fig. 4 hervorgeht, weist das Dosierorgan 17 ein (oder mehrere; nicht gezeigt) mittels eines mit der Steuer- und/oder Regeleinrichtung verbundenen Antriebs (nicht gezeigt) gesteuert und/oder geregelt in Rotation versetzbares Dosierrad 18 auf, welches je nach Art des auszubringenden Verteilguttyps beispielsweise nach Art eines Zellenrades, aber auch nach Art von Nockenrädern (nicht dargestellt) oder dergleichen ausgebildet sein kann. Während ein (unterer) Dosierauslass des Dosiergehäuses 13 des Dosierorgans 17 in die Übergabekammer 14 mündet, schließt sich stromauf des Dosierorgans 17 an dessen (oberen) Dosiereinlass eine Wiegekammer 21 einer insgesamt mit dem Bezugszeichen 20 versehenen Wiegeeinrichtung an. Die Wiegekammer 21 der Wiegeeinrichtung 20 ist dabei stromab einer z.B. am unteren Ende des sich im Wesentlichen trichterförmig nach unten verjüngenden Vorratsbehälters 1 befindlichen Auslassöffnung 19, also zwischen der Auslassöffnung 19 des Vorratsbehälter 1 und dem Dosiereinlass des Dosiergehäuses 13 des Dosierorgans 17, angeordnet. Bei dem gezeigten Ausführungsbeispiel bilden die Wiegekammer 21, das Dosierorgan 17 und die Übergabekammer 5 eine gemeinsame Baueinheit, welche einerseits von dem Vorratsbehälter 1, andererseits von der Förderleitung 6 (vgl. die Fig. 2) mechanisch entkoppelt ist, was beispielsweise einerseits durch die Anordnung des (oberen) Dosiereinlasses des Dosierorgans 17 unter einem geringen Abstand von der Auslassöffnung 19 des Vorratsbehälters 1, andererseits durch einen Anschluss der Übergabekammer 5 an die Förderleitung 6 mittels flexibler Schlauchstücke (nicht im Einzelnen zeichnerisch wiedergegeben) geschehen kann. Die Wiegeeinrichtung 20 ist zur gravimetrischen Bestimmung der Masse der aus der Wiegekammer 21, dem Dosierorgan 17 und der Übergabekammer 5 gebildeten Baueinheit mit der jeweils in die Wiegekammer 5 überführten Probe an Verteilgut ausgebildet und umfasst zu diesem Zweck beispielsweise Wägezellen 22, auf welchen die vorgenannte Baueinheit 21 aus Wiegekammer 21, Dosierorgan 17 und Übergabekammer 5 gelagert ist. Der der Auslassöffnung 19 des Vorratsbehälters 1 zugewandte (obere) Einlass der Wiegekammer 21 ist mittels eines Schiebers 23 bedarfsweise verschließbar, welcher an dem Vorratsbehälter 1 gelagert und mittels eines geeigneten Antriebs, wie z.B. in Form eines Elektromotors, einer elektrischen oder hydraulischen Kolben-/Zylindereinheit (jeweils nicht gezeigt) oder dergleichen, fernsteuerbar, insbesondere automatisch, betätigbar ist. Darüber hinaus ist die Wiegekammer 21 mit einem oder mehreren Sensor(en) 24 ausgestattet, welche zur Erfassung des hierein befindlichen Volumens an Verteilgut ausgebildet sind und bei welchen es sich um herkömmliche Sensoren handeln kann, welche beispielsweise das Füllvolumen an Verteilgut in der Wiegekammer 21 und/oder das oberhalb des in der Wiegekammer 21 befindlichen Verteilgutes verbleibende Rest- bzw. Leervolumen zu erkennen vermögen.

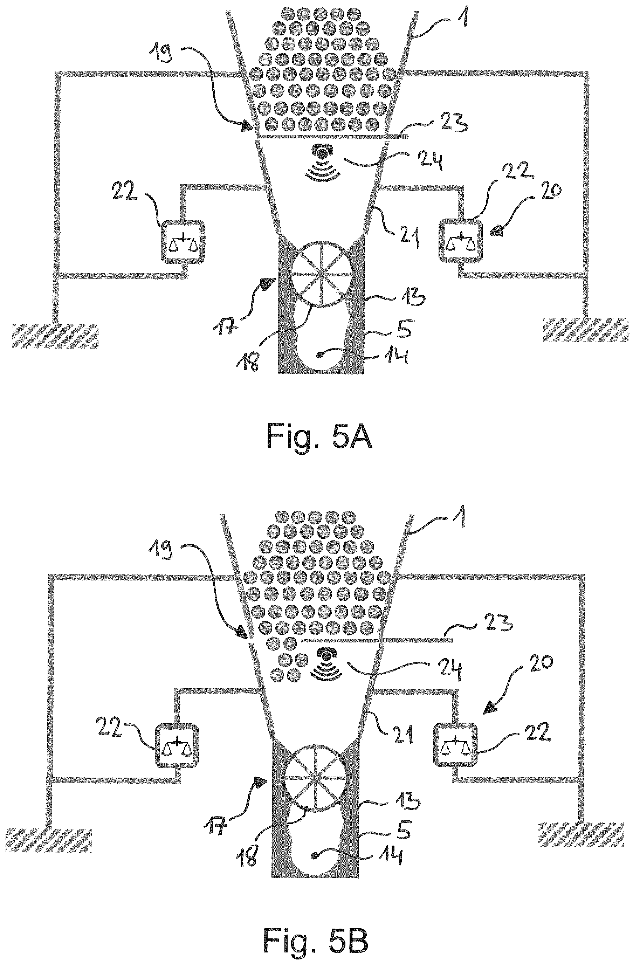

Wie im nachfolgenden noch im Einzelnen erläutert, ist der Wiegekammer 21 zum Zwecke einer Kalibrierung des Dosierorgans 17 eine Probe eines bestimmten auszubringenden Verteilguttyps aus der Auslassöffnung 19 des Vorratsbehälters 1 zuführbar, wobei in der Wiegekammer 21 einerseits mittels des Sensors 24 das Volumen der in die Wiegekammer 21 überführten Probe an Verteilgutes volumetrisch erfasst und andererseits deren Masse mittels der Wägezellen 22 der Wiegeeinrichtung 20 gravimetrisch ermittelt werden kann. Die Steuer- und/oder Regeleinrichtung vermag auf diese Weise das spezifische Gewicht bzw. die Dichte des Verteilgutes einerseits aus dem sensorisch ermittelten Volumen der Probe an Verteilgut in der Wiegekammer 21, andererseits aus der gravimetrisch ermittelten Masse der in die Wiegekammer 21 überführten Probe an Verteilgut zu ermitteln. Darüber ist in der Steuer- und/oder Regeleinrichtung zumindest ein für das Aufnahmevolumen und die Anzahl von Dosierzellen des Dosierrades 18 repräsentativer Wert hinterlegt, wie beispielsweise sowohl das Aufnahmevolumen der (einzelnen) Dosierzellen oder Gruppen von (mehreren) Dosierzellen des Dosierrades 18 als auch die Anzahl oder die Umfangsabmessungen der Dosierzellen oder Gruppen von Dosierzellen des Dosierrades 18, so dass die Steuer- und/oder Regeleinrichtung die Drehzahl des Dosierrades 18 des Dosierorgans 17 auf den Soll-Massenstrom an Verteilgut anhand der aus dem auf diese Weise ermittelten spezifischen Gewicht bzw. der Dichte des Verteilgutes ermittelten Masse an Verteilgut pro Dosierzelle oder pro Gruppe von Dosierzellen des Dosierrades 18 zu steuern und/oder zu regeln vermag. Dies kann insbesondere in der nachfolgend unter Bezugnahme auf die Fig. 5A bis 5C, in welchen gleiche oder funktionsgleiche Komponenten mit denselben Bezugszeichen versehen sind, beschriebenen Weise geschehen:

In der in der Fig. 5A erkennbaren Situation, wie sie beispielsweise zu Beginn der Verteilarbeit auftreten kann, ist der Vorratsbehälter 1 der pneumatischen Verteilmaschine (vgl. die Fig. 1 bis 3) mit einem bestimmten Verteilguttyp, z.B. Dünger und/oder Saatgut, befüllt worden. Der Schieber 23 befindet sich in seiner Schließstellung und trennt die Wiegekammer 21 der Wiegeeinrichtung 20 von der Auslassöffnung 19 des Vorratsbehälters 1 ab. Um Messfehler aufgrund von gegebenenfalls noch in der Wiegekammer 21 vorhandenen Resten an Verteilgut oder auch Verunreinigungen zu vermeiden, wird in der in der Fig. 5A gezeigten Situation ferner vorzugsweise einerseits das Leervolumen und/oder das Füllvolumen der "leeren" Wiegekammer 21 mittels des Sensors 24 erfasst; andererseits wird die "leere" Wiegekammer 21 mittels der Wägezellen 22 der Wiegeeinrichtung 20 gewogen.

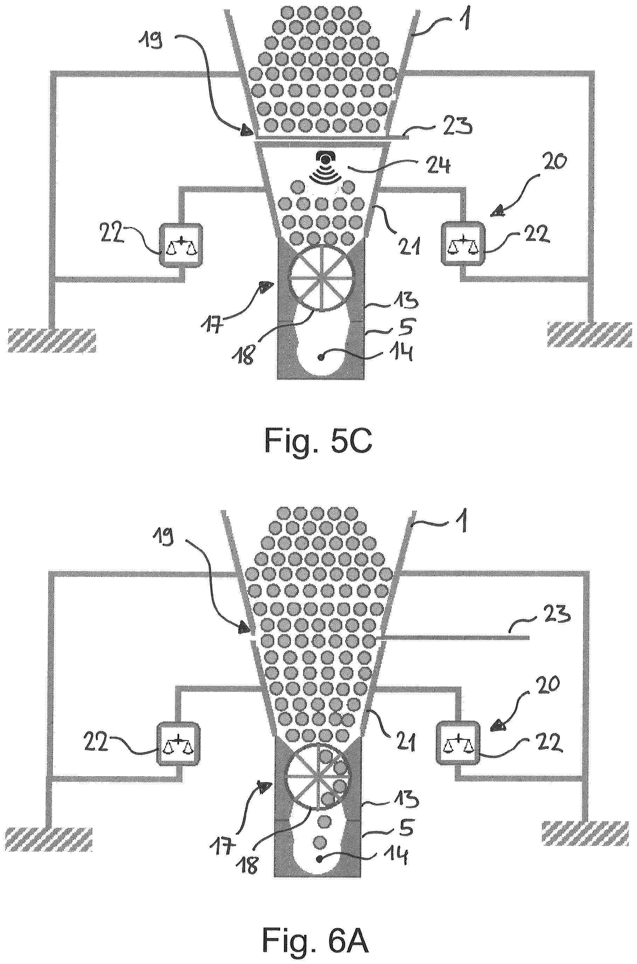

Wie aus der Fig. 5B hervorgeht, wird sodann der Schieber 23 geöffnet, um eine Probe an Verteilgut aus der Auslassöffnung 19 des Vorratsbehälters 1 rein infolge Gravitation in die Wiegekammer 21 der Wiegeeinrichtung 20 zu überführen, wonach der Einlass der Wiegekammer 21 mittels des Schiebers 23 wieder verschlossen wird (vgl. die Fig. 5C). Die Betätigung des Schiebers 23 geschieht hierbei insbesondere mittels der Steuer- und/oder Regeleinrichtung, welche den Schieber 23 beispielsweise so lange öffnet, bis die Wiegeeinrichtung 20 ein vorherbestimmbares Gewicht an Verteilgut erkannt hat, woraufhin der Schieber 23 wieder geschlossen wird.

Nachdem eine Probe an Verteilgut in der obigen Weise in die Wiegekammer 21 der Wiegeeinrichtung 20 überführt worden ist (vgl. die Fig. 5C), wird einerseits das Volumen dieser in die Wiegekammer 21 überführten Probe an Verteilgut mittels des Sensors 24 volumetrisch erfasst, andererseits wird die Masse dieser Probe an Verteilgut mittels der Wägezellen 22 gravimetrisch bestimmt, was zwecks kurzer Kalibrierzeit vorteilhafterweise im Wesentlichen gleichzeitig geschehen kann. Von den hierbei ermittelten Werten einerseits für das Volumen der Probe an Verteilgut, andererseits für deren Masse werden die zuvor bei "leerer" Wiegekammer 21 ermittelten Werte subtrahiert, um Differenzwerte zu bilden, welche frei von Fehlern aufgrund von möglicherweise anfänglich noch in der Wiegekammer 21 vorhandenen Restmengen an Verteilgut sind.

Aus dem mittels des Sensors 24 ermittelten Volumen der Probe an Verteilgut in der Wiegekammer 21 sowie aus der mittels der Wägezellen 22 der Wiegeeinrichtung 20 gravimetrisch ermittelten Masse der Probe an Verteilgut in der Wiegekammer 21 wird mittels der Steuer- und/oder Regeleinrichtung sodann das spezifische Gewicht bzw. die Masse des Verteilguttyps ermittelt. Sodann vermag die Steuer- und/oder Regeleinrichtung, in welcher der für das Aufnahmevolumen und die Anzahl von Dosierzellen des Dosierrades 18 repräsentative Wert hinterlegt worden ist (siehe oben), die Drehzahl des Dosierrades 18 des Dosierorgans 17 auf den gewünschten Soll-Massenstrom an Verteilgut zu steuern und/oder zu regeln, was anhand der mittels des auf diese Weise ermittelten spezifischen Gewichtes bzw. der Dichte des Verteilgutes ermittelten Masse an Verteilgut pro Dosierzelle oder pro Gruppe von Dosierzellen des Dosierrades 18 geschieht. Zu diesem Zweck wird der Schieber 23 wieder geöffnet und wird das Dosierrad 18 des Dosierorgans 17 mit der entsprechenden Drehzahl in Rotation versetzt, so dass die Wiegekammer 21 der Wiegeeinrichtung 20 von dem aus der Auslassöffnung 19 des Vorratsbehälters 1 in das Dosierorgan 17 überführten Verteilgut rein infolge Gravitation durchströmt wird (vgl. die Fig. 6A).

Um einer möglichen Veränderung des spezifischen Gewichtes bzw. der Dichte des Verteilgutes, wie sie beispielsweise infolge eines Feuchtigkeitseintrags auftreten kann, zu begegnen, kann die vorstehend beschriebene Kalibrierung des Dosierorgans 17 in regelmäßigen Zeitabständen wiederholt werden, wie z.B. während der Fahrt der pneumatischen Verteilmaschine durch das Vorgewende eines Feldes. Darüber hinaus macht es die erfindungsgemäße pneumatische Verteilmaschine möglich, in automatisierter Weise, z.B. ebenfalls in regelmäßigen Zeitabständen, Abdrehproben durchzuführen, indem eine Probe an Verteilgut mittels des Dosierrades 18 des Dosierorgans 17 abgedreht wird. Dies kann insbesondere in der nachfolgend unter Bezugnahme auf die Fig. 6A bis 6D, in welchen gleiche oder funktionsgleiche Komponenten mit denselben Bezugszeichen versehen sind, beschriebenen Weise geschehen:
In der in der Fig. 6A dargestellten Situation befindet sich die pneumatische Verteilmaschine im Normalbetrieb; der Schieber 23 ist geöffnet, so dass das Verteilgut aus der Auslauföffnung 19 des Vorratsbehälters 1 durch die Wiegekammer 21 der Wiegeeinrichtung 20 hindurch in das Dosiergehäuse 13 des Dosierorgans 17 überführt wird, wo das Dosierrad 18 des Dosierorgans 17 entsprechend der vorherigen Kalibrierung gemäß dem gewünschten Massenstrom an Verteilgut mittels der Steuer- und/oder Regeleinrichtung in Rotation versetzt wird.

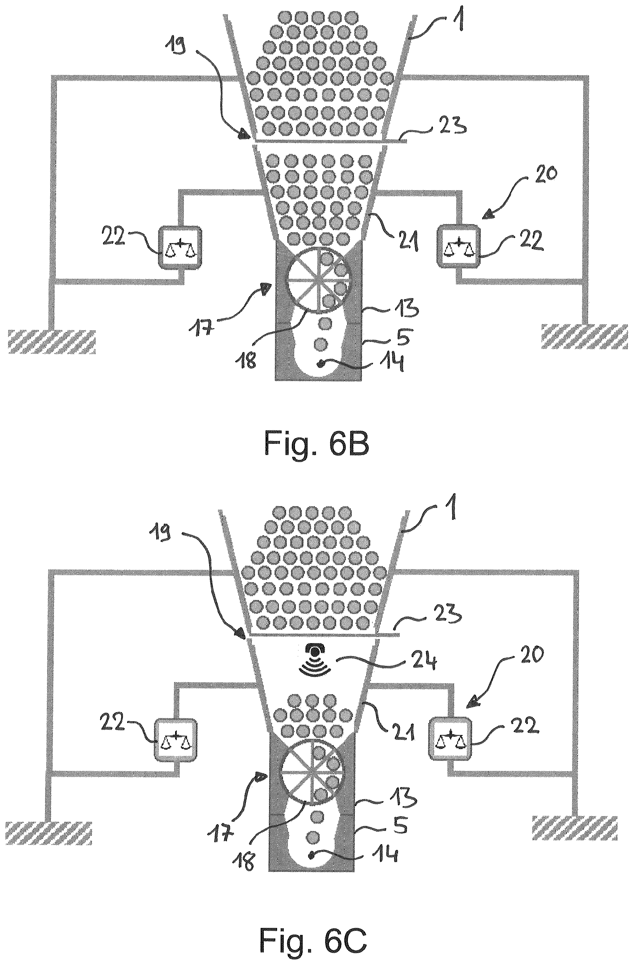

Wie in der Fig. 6B erkennbar, wird zum Zwecke einer Nachkalibrierung des Dosierorgans 17 nach Art einer Abdrehprobe nun der Schieber 23 in die Schließstellung versetzt, um eine in die Wiegekammer 21 der Wiegeeinrichtung 20 überführte Probe an Verteilgut dort aufzunehmen und ein Nachlaufen weiteren Verteilgutes aus der Auslauföffnung 19 des Vorratsbehälters 1 in die Wiegekammer 21 zu unterbrechen. Sodann wird die Masse der in die Wiegekammer 21 der Wiegeeinrichtung 20 überführten Probe an Verteilgut mittels der Wägezellen 22 der Wiegeeinrichtung 20 gravimetrisch bestimmt, wobei das Dosierrad 18 vorzugsweise vorübergehend angehalten wird, um für eine hohe Messgenauigkeit zu sorgen.

Wie in der Fig. 6C erkennbar, wird das Dosierrad 18 des Dosierorgans 17 sodann über einen vorherbestimmten Kalibrierzeitraum mit der zuvor ermittelten Drehzahl entsprechend dem Soll-Massenstrom an Verteilgut rotiert, bis zumindest ein Anteil des in der Wiegekammer 21 aufgenommenen Probenahmevolumens an Verteilgut dosiert worden ist. Die in der Wiegekammer 21 der Wiegeeinrichtung 20 verbliebene Masse an Verteilgut wird dann mittels der Wägezellen 22 der Wiegeeinrichtung 20 gravimetrisch bestimmt, wobei das Dosierrad 18 wiederum vorzugsweise vorübergehend angehalten wird, um für eine hohe Messgenauigkeit zu sorgen. Aus der Differenz dieser gravimetrisch ermittelten Massen an Verteilgut bezogen auf den Kalibrierzeitraum kann sodann mittels der Steuer- und/oder Regeleinrichtung ein Ist-Massenstrom an Verteilgut errechnet werden, welcher mit dem Soll-Massenstrom an Verteilgut verglichen wird.

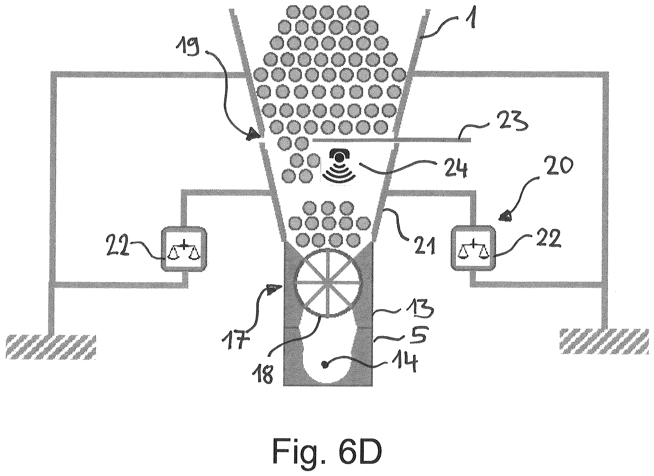

Entspricht der derart errechnete Ist-Massenstrom an Verteilgut dem Soll-Massenstrom oder weicht von letzterem weniger als ein vorherbestimmbarer Maximalwert ab, so kann der Schieber 23 wieder geöffnet und der Normalbetrieb fortgesetzt werden, wie es in der Fig. 6D schematisch wiedergegeben ist. Im Falle einer Abweichung des derart errechneten Ist-Massenstromes an Verteilgut von dem Soll-Massenstrom kann die Drehzahl des Dosierrades 18 des Dosierorgans 17 indes auf den Soll-Massenstrom an Verteilgut gesteuert und/oder geregelt werden, wonach wiederum der Normalbetrieb fortgesetzt werden kann (vgl. die Fig. 6D). Die obigen Schritte der Nachkalibrierung des Dosierorgans 17 nach Art einer Abdrehprobe können bedarfsweise so oft wiederholt werden, bis der derart errechnete Ist-Massenstrom an Verteilgut dem Soll-Massenstrom entspricht oder von letzterem um nicht mehr als der vorherbestimmte Maximalwert abweicht.

## Patentansprüche

1. Pneumatische Verteilmaschine, umfassend
- wenigstens einen Vorratsbehälter (1) zur Aufnahme von Verteilgut mit wenigstens einer Auslassöffnung (19);
- wenigstens ein der Auslassöffnung (19) des Vorratsbehälters (1) nachgeordnetes Dosierorgan (17) mit wenigstens einem Dosierrad (18) mit einer Mehrzahl an Dosierzellen;
- eine mit dem Dosierorgan (17) in Verbindung stehende Steuer- und/oder Regeleinrichtung, welche zur Steuerung und/oder Regelung der Drehzahl des Dosierrades (18) auf einen Soll-Massenstrom an Verteilgut in Abhängigkeit wenigstens eines Parameters aus der Gruppe Soll-Verteilmenge pro Flächeneinheit, Fahrgeschwindigkeit und Arbeitsbreite ausgebildet ist;
- wenigstens eine dem Dosierorgan (17) nachgeordnete Übergabekammer (5) zur Überführung von mittels des Dosierorgans (17) dosiertem Verteilgut in wenigstens eine Förderleitung (6);
- wenigstens ein Gebläse (4) zur Beaufschlagung der Förderleitung (6) mit einem Luftstrom;
- wenigstens ein der Förderleitung (6) nachgeordnetes Verteilorgan; und
- wenigstens eine Wiegeeinrichtung (20) mit einer Wiegekammer (21), welcher eine Probe eines bestimmten auszubringenden Verteilguttyps zur Kalibrierung des Dosierorgans (17) zuführbar ist, um die Masse der in die Wiegekammer (21) überführten Probe an Verteilgut gravimetrisch zu bestimmen,
wobei die stromauf des Dosierorgans angeordnete Wiegekammer (21) der Wiegeeinrichtung (20) mit wenigstens einem Sensor (24) zur Erfassung des Volumens der ihr zugeführten Probe an Verteilgut ausgestattet ist, dass die Steuer- und/oder Regeleinrichtung zur Ermittlung des spezifischen Gewichtes des Verteilgutes einerseits aus dem sensorisch ermittelten Volumen der Probe an Verteilgut in der Wiegekammer (21), andererseits aus der mittels der Wiegeeinrichtung (20) gravimetrisch ermittelten Masse der in die Wiegekammer (21) überführten Probe an Verteilgut ausgebildet ist, und dass in der Steuer- und/oder Regeleinrichtung zumindest ein für das Aufnahmevolumen und die Anzahl von Dosierzellen des Dosierrades (18) repräsentativer Wert hinterlegt ist, wobei die Steuer- und/oder Regeleinrichtung zur Steuerung und/oder Regelung der Drehzahl des Dosierrades (18) des Dosierorgans (17) auf den Soll-Massenstrom an Verteilgut anhand der aus dem derart ermittelten spezifischen Gewicht des Verteilgutes ermittelten Masse an Verteilgut pro Dosierzelle oder pro Gruppe von Dosierzellen des Dosierrades (18) ausgebildet ist.

2. Verteilmaschine nach Anspruch 1, **dadurch gekennzeichnet, dass** das Dosierorgan (17) eine Mehrzahl an verschiedenen Dosierrädern (18) umfasst, welche insbesondere einzeln und/oder gruppenweise aktivierbar und deaktivierbar oder gegeneinander austauschbar sind, wobei in der Steuer- und/oder Regeleinrichtung eine Mehrzahl an für das Aufnahmevolumen und die Anzahl von Dosierzellen der verschiedenen Dosierräder (18) repräsentativen Werte hinterlegt ist, und wobei die Steuer- und/oder Regeleinrichtung den/die für das Aufnahmevolumen und die Anzahl von Dosierzellen des/der aktuell in Betrieb befindlichen Dosierrades (18)/Dosierräder (18) repräsentativen Wert(e) bei der Steuerung und/oder Regelung der Drehzahl des Dosierrades (18)/der Dosierräder (18) auf den Soll-Massenstrom an Verteilgut berücksichtigt.

3. Verteilmaschine nach Anspruch 1 oder 2, **dadurch gekennzeichnet, dass** die stromauf des Dosierorgans (17) angeordnete Wiegekammer (21) der Wiegeeinrichtung (20)
- oberhalb einem Dosiereinlass des Dosierorgans (17) angeordnet ist, um in der Wiegekammer (21) befindliches Verteilgut infolge Gravitation an das Dosierorgan (17) zu überführen; und/oder
- stromab der Auslassöffnung (19) des Vorratsbehälters (1) angeordnet ist, wobei die Wiegekammer (21) der Wiegeeinrichtung (20) insbesondere unterhalb der Auslassöffnung (19) des Vorratsbehälters (1) angeordnet ist, um in dem Vorratsbehälter (1) bevorratetes Verteilgut infolge Gravitation in die Wiegekammer (21) zu überführen.

4. Verteilmaschine nach einem der Ansprüche 1 bis 3, **dadurch gekennzeichnet, dass** die Wiegekammer (21) der Wiegeeinrichtung (20) einen, insbesondere mittels eines Schiebers (23), verschließbaren Einlass aufweist.

5. Verteilmaschine nach einem der Ansprüche 1 bis 4, **dadurch gekennzeichnet, dass** die Wiegekammer (21), das Dosierorgan (17) und die Übergabekammer (5) eine gemeinsame Baueinheit bilden, welche einerseits von dem Vorratsbehälter (1), andererseits von der Förderleitung (6) mechanisch entkoppelt ist, wobei die Wiegeeinrichtung (22) zur gravimetrischen Bestimmung der Masse der aus der Wiegekammer (21), dem Dosierorgan (17) und der Übergabekammer (5) gebildeten Baueinheit mit der in die Wiegekammer (21) überführten Probe an Verteilgut ausgebildet ist.

6. Verfahren zur Steuerung und/oder Regelung eines Dosierorgans (17) einer pneumatischen Verteilmaschine, umfassend
- wenigstens einen Vorratsbehälter (1) zur Aufnahme von Verteilgut mit wenigstens einer Auslassöffnung (19);
- wenigstens ein der Auslassöffnung (19) des Vorratsbehälters (1) nachgeordnetes Dosierorgan (17) mit wenigstens einem Dosierrad (18) mit einer Mehrzahl an Dosierzellen;
- eine mit dem Dosierorgan (17) in Verbindung stehende Steuer- und/oder Regeleinrichtung, welche zur Steuerung und/oder Regelung der Drehzahl des Dosierrades (18) auf einen Soll-Massenstrom an Verteilgut in Abhängigkeit wenigstens eines Parameters aus der Gruppe Soll-Verteilmenge pro Flächeneinheit, Fahrgeschwindigkeit und Arbeitsbreite ausgebildet ist;
- wenigstens eine dem Dosierorgan (17) nachgeordnete Übergabekammer (5) zur Überführung von mittels des Dosierorgans (17) dosiertem Verteilgut in wenigstens eine Förderleitung (6);
- wenigstens ein Gebläse (4) zur Beaufschlagung der Förderleitung (6) mit einem Luftstrom;
- wenigstens ein der Förderleitung (6) nachgeordnetes Verteilorgan; und
- wenigstens eine Wiegeeinrichtung (20) mit einer stromauf des Dosierorgans (17) angeordneten Wiegekammer (21), welcher eine Probe eines bestimmten auszubringenden Verteilguttyps zur Kalibrierung des Dosierorgans (17) zuführbar ist, um die Masse der in die Wiegekammer (21) überführten Probe an Verteilgut gravimetrisch zu bestimmen, ferner umfassend die folgenden Schritte:
(a) Überführen einer Probe an Verteilgut in die Wiegekammer (21) der Wiegeeinrichtung (20);
(b) sensorisches Erfassen des Volumens der in die Wiegekammer (21) der Wiegeeinrichtung (20) überführten Probe an Verteilgut;
(c) gravimetrisches Bestimmen der Masse der in die Wiegekammer (21) überführten Probe an Verteilgut mittels der Wiegeeinrichtung (20);
(d) Ermitteln des spezifischen Gewichtes des Verteilgutes einerseits aus dem sensorisch ermittelten Volumen der Probe an Verteilgut in der Wiegekammer (21), andererseits aus der mittels der Wiegeeinrichtung gravimetrisch ermittelten Masse der in die Wiegekammer (21) überführten Probe an Verteilgut; und
(e) Steuern und/oder Regeln der Drehzahl des Dosierrades (18) des Dosierorgans (17) mittels der Steuer- und/oder Regeleinrichtung, in welcher zumindest ein für das Aufnahmevolumen und die Anzahl von Dosierzellen des Dosierrades (18) repräsentativer Wert hinterlegt wird, auf den Soll-Massenstrom an Verteilgut anhand der mittels des derart ermittelten spezifischen Gewichtes des Verteilgutes ermittelten Masse an Verteilgut pro Dosierzelle oder pro Gruppe von Dosierzellen des Dosierrades (18).

7. Verfahren nach Anspruch 6, **dadurch gekennzeichnet, dass** in der Steuer- und/oder Regeleinrichtung eine Mehrzahl an Werten hinterlegt wird, welche für das Aufnahmevolumen und die Anzahl von Dosierzellen verschiedener Dosierräder (18) des eine Mehrzahl an verschiedenen, insbesondere einzeln und/oder gruppenweise aktivierbaren und deaktivierbaren oder gegeneinander austauschbaren, Dosierrädern (18) umfassenden Dosierorgans (17) repräsentativ sind, wobei die Steuer- und/oder Regeleinrichtung den/die für das Aufnahmevolumen und die Anzahl von Dosierzellen des/der aktuell in Betrieb befindlichen Dosierrades (18)/Dosierräder (18) repräsentativen Wert(e) bei der Steuerung und/oder Regelung der Drehzahl des Dosierrades (18)/der Dosierräder (18) auf den Soll-Massenstrom an Verteilgut berücksichtigt.

8. Verfahren nach Anspruch 6 oder 7, **dadurch gekennzeichnet, dass** das Verteilgut gemäß Schritt (a), insbesondere infolge Gravitation, aus der Auslassöffnung (19) des Vorratsbehälters (1) in die Wiegekammer (21) der Wiegeeinrichtung (20) überführt wird.

9. Verfahren nach einem der Ansprüche 6 bis 8, **dadurch gekennzeichnet, dass** das Verteilgut infolge Gravitation von der Wiegekammer (21) der Wiegeeinrichtung (20) in das Dosierrad (18) des Dosierorgans (17) überführt wird.

10. Verfahren nach einem der Ansprüche 6 bis 9, **dadurch gekennzeichnet, dass** das Verteilgut gemäß Schritt (a) aus der Auslassöffnung (19) des Vorratsbehälters (1) in einen Einlass der Wiegekammer (21) der Wiegeeinrichtung (20) überführt wird, wonach der Einlass der Wiegekammer (21), insbesondere mittels eines Schiebers (23), verschlossen wird, wonach das Volumen der in die Wiegekammer (21) der Wiegeeinrichtung (20) überführten Probe an Verteilgut gemäß Schritt (b) sensorisch erfasst und deren Masse gemäß Schritt (c) mittels der Wiegeeinrichtung (20) gravimetrisch bestimmt wird.

11. Verfahren nach einem der Ansprüche 6 bis 10, **dadurch gekennzeichnet, dass** die Wiegekammer (21) der Wiegeeinrichtung (20) während des Normalbetriebs der Verteilmaschine von dem aus der Auslassöffnung (19) des Vorratsbehälters (1) an das Dosierorgan (17) überführten Verteilgut durchströmt wird.

12. Verfahren nach einem der Ansprüche 6 bis 11, **dadurch gekennzeichnet, dass** das sensorische Erfassen des Volumens der in die Wiegekammer (21) der Wiegeeinrichtung (20) überführten Probe an Verteilgut gemäß Schritt (b) und das gravimetrische Bestimmen der Masse der in die Wiegekammer (21) überführten Probe an Verteilgut mittels der Wiegeeinrichtung (20) gemäß Schritt (c) im Wesentlichen gleichzeitig erfolgt.

13. Verfahren nach einem der Ansprüche 6 bis 12, **dadurch gekennzeichnet, dass**
- zum sensorischen Erfassen des Volumens der in die Wiegekammer (21) der Wiegeeinrichtung (20) überführten Probe an Verteilgut gemäß Schritt (b) zunächst das Leervolumen und/oder das Füllvolumen der Wiegekammer (21) sensorisch erfasst wird, wonach die Probe an Verteilgut in die Wiegekammer (21) überführt und das verbleibende Leervolumen und/oder das Füllvolumen der mit der Probe an Verteilgut befüllten Wiegekammer (21) sensorisch erfasst wird, wonach das Volumen der Probe an Verteilgut aus der Differenz dieser Leer- und/oder Füllvolumina der Wiegekammer (21) errechnet wird; und/oder
- zum gravimetrischen Bestimmen der Masse der in die Wiegekammer (21) überführten Probe an Verteilgut mittels der Wiegeeinrichtung (20) gemäß Schritt (c) zunächst die Wiegekammer (21) mittels der Wiegeeinrichtung (20) gewogen wird, wonach die Probe an Verteilgut in die Wiegekammer (21) überführt und die mit der Probe an Verteilgut befüllte Wiegekammer (21) mittels der Wiegeeinrichtung (20) gewogen wird, wonach die Masse der Probe an Verteilgut aus der Differenz dieser Wiegungen errechnet wird.

14. Verfahren nach einem der Ansprüche 6 bis 13, **dadurch gekennzeichnet, dass** zum Nachkalibrieren des Dosierorgans (17), insbesondere in periodischen Zeitabständen, ferner
(A) eine Probe an Verteilgut in die Wiegekammer (21) der Wiegeeinrichtung (20) überführt wird;
(B) die Masse der in die Wiegekammer (21) der Wiegeeinrichtung (20) überführten Probe an Verteilgut mittels der Wiegeeinrichtung (20) gravimetrisch bestimmt wird;
(C) das Dosierrad (18) des Dosierorgans (17) über einen vorherbestimmten Kalibrierzeitraum mit der zuvor ermittelten Drehzahl entsprechend dem Soll-Massenstrom an Verteilgut rotiert wird;
(D) sodann die in der Wiegekammer (21) der Wiegeeinrichtung (20) verbliebene Masse an Verteilgut mittels der Wiegeeinrichtung (20) gravimetrisch bestimmt wird;
(E) aus der Differenz dieser gravimetrisch ermittelten Massen an Verteilgut bezogen auf den Kalibrierzeitraum ein Ist-Massenstrom an Verteilgut errechnet wird;
(F) der derart errechnete Ist-Massenstrom mit dem Soll-Massenstrom an Verteilgut verglichen wird; und
(G) im Falle einer Abweichung des derart errechneten Ist-Massenstromes an Verteilgut von dem Soll-Massenstrom die Drehzahl des Dosierrades (18) auf den Soll-Massenstrom an Verteilgut gesteuert und/oder geregelt wird.

15. Verfahren nach Anspruch 14, **dadurch gekennzeichnet, dass** die Schritte (A) bis (G) so oft wiederholt werden, bis der derart errechnete Ist-Massenstrom an Verteilgut dem Soll-Massenstrom entspricht oder von letzterem um nicht mehr als ein vorherbestimmter Maximalwert abweicht.

## Claims

1. Pneumatic distribution machine, comprising:
- at least one storage hopper (1) for receiving goods to be distributed, having at least one outlet opening (19);
- at least one metering member (17) which is disposed downstream of the outlet opening (19) of the storage hopper (1), having at least one metering wheel (18) having a plurality of metering cells;
- a control and/or regulating device which is connected to the metering member (17) and is configured to control and/or regulate the rotating speed of the metering wheel (18) to a target mass flow of goods to be distributed as a function of at least one parameter from the group of target distribution amount per unit area, travel speed, and working width;
- at least one transfer chamber (5) disposed downstream of the metering member (17), for transferring goods to be distributed which have been metered by means of the metering member (17) into at least one conveying line (6);
- at least one fan (4) for impinging the conveying line (6) with an airstream;
- at least one distribution member which is disposed downstream of the conveying line (6); and
- at least one weighing installation (20) having a weighing chamber (21) to which a specimen of a specific type of goods to be distributed is able to be supplied for calibrating the metering member (17), so as to gravimetrically determine the mass of the specimen of goods to be distributed which has been transferred into the weighing chamber (21),
wherein the weighing chamber (21) of the weighing installation (20), which is disposed upstream of the metering member, is equipped with at least one sensor (24) for detecting the volume of the specimen of goods to be distributed which has been supplied to said weighing chamber (21); that the control and/or regulating device is configured to determine the specific weight of the goods to be distributed from the volume of the specimen of goods to be distributed determined by sensor in the weighing chamber (21) on the one hand, and from the mass of the specimen of goods to be distributed which has been transferred into the weighing chamber (21) and gravimetrically determined by means of the weighing installation (20) on the other hand; and that at least one value representative of the storage volume and of the number of metering cells of the metering wheel (18) is stored in the control and/or regulating device, wherein the control and/or regulating device, by way of the mass of goods to be distributed per metering cell or per group of metering cells of the metering wheel (18) determined from the specific weight of the goods to be distributed determined in such a manner, is configured to control and/or regulate the rotating speed of the metering wheel (18) of the metering member (17) to the target mass flow of goods to be distributed.

2. Distribution machine according to Claim 1, **characterized in that** the metering member (17) comprises a plurality of different metering wheels (18) which are in particular activatable and de-activatable individually and/or in groups or mutually interchangeable, wherein a plurality of values representative of the storage volume and the number of metering cells of the different metering wheels (18) are stored in the control and/or regulating device, and wherein the control and/or regulating device, when controlling and/or regulating the rotating speed of the metering wheel (18)/metering wheels (18) to the target mass flow of goods to be distributed, takes into account the value(s) representative of the storage volume and the number of metering cells of the metering wheel (18)/metering wheels (18) currently in operation.

3. Distribution machine according to Claim 1 or 2, **characterized in that** the weighing chamber (21) of the weighing installation (20), which is disposed upstream of the metering member (17)
- is disposed above a metering inlet of the metering member (17), so as to transfer goods to be distributed situated in the weighing chamber (21) to the metering member (17) by gravity; and/or
- is disposed downstream of the outlet opening (19) of the storage hopper (1), wherein the weighing chamber (21) of the weighing installation (20) is disposed in particular below the outlet opening (19) of the storage hopper (1), so as to transfer goods to be distributed stored in the storage hopper (1) into the weighing chamber (21) by gravity.

4. Distribution machine according to one of Claims 1 to 3, **characterized in that** the weighing chamber (21) of the weighing installation (20) has an inlet which is in particular closable by means of a slide (23).

5. Distribution machine according to one of Claims 1 to 4, **characterized in that** the weighing chamber (21), the metering member (17) and the transfer chamber (5) form a common module which is mechanically decoupled from the storage hopper (1), on the one hand, and from the conveying line (6), on the other hand, wherein the weighing installation (22) is configured to gravimetrically determine the mass of the module formed by the weighing chamber (21), the metering member (17) and the transfer chamber (5) conjointly with the specimen of goods to be distributed which has been transferred into the weighing chamber (21).

6. Method for controlling and/or regulating a metering member (17) of a pneumatic distribution machine, comprising
- at least one storage hopper (1) for receiving goods to be distributed, having at least one outlet opening (19);
- at least one metering member (17) which is disposed downstream of the outlet opening (19) of the storage hopper (1), having at least one metering wheel (18) having a plurality of metering cells;
- a control and/or regulating device which is connected to the metering member (17) and is configured to control and/or regulate the rotating speed of the metering wheel (18) to a target mass flow of goods to be distributed as a function of at least one parameter from the group of target distribution amount per unit area, travel speed, and working width;
- at least one transfer chamber (5) disposed downstream of the metering member (17), for transferring goods to be distributed which have been metered by means of the metering member (17) into at least one conveying line (6);
- at least one fan (4) for impinging the conveying line (6) with an airstream;
- at least one distribution member which is disposed downstream of the conveying line (6); and
- at least one weighing installation (20) having a weighing chamber (21) which is disposed upstream of the metering member (17) and to which a specimen of a specific type of goods to be distributed is able to be supplied for calibrating the metering member (17), so as to gravimetrically determine the mass of the specimen of goods to be distributed which has been transferred into the weighing chamber (21),
furthermore comprising the following steps:
a) transferring a specimen of goods to be distributed into the weighing chamber (21) of the weighing installation (20);
b) determining by sensor the volume of the specimen of goods to be distributed which has been transferred into the weighing chamber (21) of the weighing installation (20);
c) gravimetrically determining by means of the weighing installation (20) the mass of the specimen of goods to be distributed which has been transferred into the weighing chamber (21);
d) determining the specific weight of the goods to be distributed from the volume of the specimen of goods to be distributed determined by sensor in the weighing chamber (21) on the one hand, and from the mass of the specimen of goods to be distributed which has been transferred into the weighing chamber (21) and gravimetrically determined by means of the weighing installation on the other hand; and
e) controlling and/or regulating the rotating speed of the metering wheel (18) of the metering member (17) by means of the control and/or regulating device, in which is stored at least one value representative of the storage volume and the number of metering cells of the metering wheel (18), to the target mass flow of goods to be distributed, by way of the mass of goods to be distributed per metering cell or per group of metering cells of the metering wheel (18) determined by means of the specific weight of the goods to be distributed determined in such a manner.

7. Method according to Claim 6, **characterized in that** stored in the control and/or regulating device are a plurality of values which are representative of the storage volume and the number of metering cells of different metering wheels (18) of the metering member (17) which comprises a plurality of different metering wheels (18) that are in particular activatable and de-activatable individually and/or in groups or mutually interchangeable, wherein the control and/or regulating device, when controlling and/or regulating the rotating speed of the metering wheel (18)/metering wheels (18) to the target mass flow of goods to be distributed, takes into account the value(s) representative of the storage volume and the number of metering cells of the metering wheel (18)/metering wheels (18) currently in operation.

8. Method according to Claim 6 or 7, **characterized in that** the goods to be distributed according to step a) are transferred from the outlet opening (19) of the storage hopper (1) into the weighing chamber (21) of the weighing installation (20) in particular by gravity.

9. Method according to one of Claims 6 to 8, **characterized in that** the goods to be distributed are transferred from the weighing chamber (21) of the weighing installation (20) into the metering wheel (18) of the metering member (17) by gravity.

10. Method according to one of Claims 6 to 9, **characterized in that** the goods to be distributed according to step a) are transferred from the outlet opening (19) of the storage hopper (1) into an inlet of the weighing chamber (21) of the weighing installation (20), whereupon the inlet of the weighing chamber (21) is closed, in particular by a slide (23), whereupon the volume of the specimen of goods to be distributed which has been transferred into the weighing chamber (21) of the weighing installation (20) according to step b) is detected by sensor, and the mass of said specimen according to step c) is gravimetrically determined by means of the weighing installation (20).

11. Method according to one of Claims 6 to 10, **characterized in that** the weighing chamber (21) of the weighing installation (20) during the normal operation of the distribution machine is passed through by the flow of goods to be distributed, the latter being transferred from the outlet opening (19) of the storage hopper (1) to the metering member (17).

12. Method according to one of Claims 6 to 11, **characterized in that** the detection by sensor of the volume of the specimen of goods to be distributed which has been transferred into the weighing chamber (21) of the weighing installation (20) according to step b), and the gravimetrical determination by means of the weighing installation (20) of the mass of the specimen of goods to be distributed which has been transferred into the weighing chamber (21) according to step c) take place substantially simultaneously.

13. Method according to one of Claims 6 to 12, **characterized in that**
- for detecting by sensor the volume of the specimen of goods to be distributed which has been transferred into the weighing chamber (21) of the weighing installation (20) according to step b), first the empty volume and/or the filling volume of the weighing chamber (21) are/is detected by sensor, whereupon the specimen of goods to be distributed is transferred into the weighing chamber (21), and the remaining empty volume and/or the filling volume of the weighing chamber (21) which is filled with the specimen of goods to be distributed are/is detected by sensor, whereupon the volume of the specimen of goods to be distributed is computed from the difference of these empty and/or filling volumes of the weighing chamber (21); and/or
- for gravimetrically determining by means of the weighing installation (20) the mass of the specimen of goods to be distributed which has been transferred into the weighing chamber (21) according to step c), first the weighing chamber (21) is weighed by means of the weighing installation (20), whereupon the specimen of goods to be distributed is transferred into the weighing chamber (21), and the weighing chamber (21) which is filled with the specimen of goods to be distributed is weighed by means of the weighing installation (20), whereupon the mass of the specimen of goods to be distributed is computed from the difference of these weighing operations.

14. Method according to one of Claims 6 to 13, **characterized in that** for re-calibrating the metering member (17), in particular at regular intervals, furthermore
A) a specimen of goods to be distributed is transferred into the weighing chamber (21) of the weighing installation (20);
B) the mass of the specimen of goods to be distributed which has been transferred into the weighing chamber (21) of the weighing installation (20) is gravimetrically determined by means of the weighing installation (20);
C) the metering wheel (18) of the metering member (17) over a predetermined calibration period is rotated at the previously determined rotating speed corresponding to the target mass flow of goods to be distributed;
D) subsequently, the mass of goods to be distributed which remains in the weighing chamber (21) of the weighing installation (20) is gravimetrically determined by means of the weighing installation (20);
E) an actual mass flow of goods to be distributed is computed from the difference of these masses of goods to be distributed which have been gravimetrically determined in terms of the calibration period;
F) the actual mass flow computed in such a manner is compared with the target mass flow of goods to be distributed; and
G) in the event of a variance of the actual mass flow of goods to be distributed computed in such a manner from the target mass flow, the rotating speed of the metering wheel (18) is controlled and/or regulated to the target mass flow of goods to be distributed.

15. Method according to Claim 14, **characterized in that** the steps A) to G) are repeated until the actual mass flow of goods to be distributed which has been computed in such a manner corresponds to the target mass flow, or does not deviate from the latter by more than a predetermined maximum value.

## Revendications

1. Machine à épandre pneumatique, comprenant :
- au moins un réservoir (1) destiné à recevoir un produit à épandre avec au moins une ouverture de sortie (19) ;
- au moins un organe de dosage (17) placé en aval de l'ouverture de sortie (19) du réservoir (1) avec au moins une roue de dosage (18) dotée d'une pluralité de cellules de dosage ;
- un dispositif de commande et/ou de régulation relié à l'organe de dosage (17), ledit dispositif étant réalisé de façon à commander et/ou réguler la vitesse de rotation de la roue de dosage (18) à un débit massique théorique de produit à épandre en fonction d'au moins un paramètre parmi le groupe comprenant la quantité à épandre théorique par unité de surface, la vitesse de conduite et la largeur de travail ;
- au moins une chambre de déversement (5) placée en aval de l'organe de dosage (17) afin de déverser le produit à épandre dosé à l'aide de l'organe de dosage (17) dans au moins une conduite de transport (6) ;
- au moins une soufflerie (4) servant à alimenter la conduite de transport (6) avec un courant d'air ;
- au moins un organe d'épandage placé en aval de la conduite de transport (6) ; et
- au moins un dispositif de pesée (20) avec un caisson de pesée (21) dans lequel peut être amené un échantillon d'un type de produit à épandre défini à extraire en vue d'étalonner l'organe de dosage (17), afin de déterminer la masse de l'échantillon de produit à épandre déversé dans le caisson de pesée de façon gravimétrique ;
**caractérisée en ce que** le caisson de pesée (21), disposé en amont de l'organe de dosage, du dispositif de pesée (20) est équipé d'au moins un capteur (24) permettant de détecter le volume de l'échantillon de produit à épandre amené, que le dispositif de commande et/ou de régulation est conçu pour déterminer le poids spécifique du produit à épandre, d'une part à partir du volume déterminé par voie de capteurs de l'échantillon de produit à épandre dans le caisson de pesée (21), d'autre part à partir de la masse, déterminée de façon gravimétrique à l'aide du dispositif de pesée (20), de l'échantillon de produit à épandre déversé dans le caisson de pesée, et que dans le dispositif de commande et/ou de régulation, au moins une valeur représentative du volume reçu et du nombre de cellules de dosage de la roue de dosage (18) est mémorisée, le dispositif de commande et/ou de régulation étant conçu pour commander et/ou réguler la vitesse de rotation de la roue de dosage (18) de l'organe de dosage (17) en fonction du débit massique théorique de produit à épandre à l'aide de la masse de produit à épandre par cellule de dosage ou par groupe de cellules de dosage de la roue de dosage (18) déterminée à partir du poids spécifique déterminé de produit à épandre déterminé de cette façon.

2. Machine à épandre selon la revendication 1, **caractérisée en ce que** l'organe de dosage (17) comprend une pluralité de roues de dosage (18) différentes pouvant notamment être activées et désactivées individuellement et/ou en groupe ou être interchangées entre elles, une pluralité de valeurs représentatives de volume reçu et de nombre de cellules de dosage des différentes roues de dosage (18) étant mémorisée dans le dispositif de commande et/ou de régulation et le dispositif de commande et/ou de régulation prenant en compte la ou les valeur(s) représentatives du volume reçu et du nombre de cellules de dosage de la roue de dosage (18) ou des roues de dosage (18) se trouvant actuellement en fonctionnement pour la commande et/ou la régulation de la vitesse de rotation de la roue de dosage (18)/des roues de dosage (18) en fonction du débit massique théorique de produit à épandre.

3. Machine à épandre selon la revendication 1 ou 2, **caractérisée en ce que** le caisson de pesée (21), disposé en amont de l'organe de dosage (17), du dispositif de pesée (20) est disposé :
- au-dessus d'une admission de dosage de l'organe de dosage (17), pour déverser jusqu'à l'organe de dosage (17) le produit à épandre se trouvant dans le caisson de pesée (21) du fait de la gravitation ; et/ou
en aval de l'ouverture de sortie (19) du réservoir (1), le caisson de pesée (21) du dispositif de pesée (20) étant notamment disposé en dessous de l'ouverture de sortie (19) du réservoir (1) pour déverser le produit à épandre amené dans le réservoir (1) par gravitation jusque dans le caisson de pesée (21).

4. Machine à épandre selon l'une quelconque des revendications 1 à 3, **caractérisée en ce que** le caisson de pesée (21) du dispositif de pesée (20) comporte une admission pouvant notamment être refermée à l'aide d'un coulisseau (23).

5. Machine à épandre selon l'une quelconque des revendications 1 à 4, **caractérisée en ce que** le caisson de pesée (21), l'organe de dosage (17) et la chambre de déversement (5) forment une unité de construction commune découplée de façon mécanique d'une part du réservoir (1), d'autre part de la conduite de transport (6), le dispositif de pesée (22) étant réalisé de façon à déterminer de façon gravimétrique la masse de l'unité de construction formée à partir du caisson de pesée (21), de l'organe de dosage (17) et de la chambre de déversement (5) avec l'échantillon de produit à épandre déversé dans le caisson de pesée.

6. Procédé pour commander et/ou réguler un organe de dosage (17) d'une machine à épandre pneumatique, comprenant :
- au moins un réservoir (1) destiné à recevoir un produit à épandre avec au moins une ouverture de sortie (19) ;
- au moins un organe de dosage (17) placé en aval de l'ouverture de sortie (19) du réservoir (1) avec au moins une roue de dosage (18) comprenant une pluralité de cellules de dosage ;
- un dispositif de commande et/ou de régulation relié à l'organe de dosage (17) et conçu pour commander et/ou réguler la vitesse de rotation de la roue de dosage (18) à un débit massique théorique de produit à épandre en fonction d'au moins un paramètre parmi le groupe comprenant la quantité à épandre théorique par unité de surface, la vitesse de conduite et la largeur de travail ;
- au moins une chambre de déversement (5) placée en aval de l'organe de dosage (17) afin de déverser le produit à épandre dosé à l'aide de l'organe de dosage (17) dans au moins une conduite de transport (6) ;
- au moins une soufflerie (4) servant à alimenter la conduite de transport (6) avec un courant d'air ;
- au moins un organe d'épandage placé en aval de la conduite de transport (6) ; et
- au moins un dispositif de pesée (20) avec un caisson de pesée (21) disposé en amont de l'organe de dosage (17) pouvant amener un échantillon d'un type de produit à épandre défini à extraire en vue d'étalonner l'organe de dosage (17), afin de déterminer de façon gravimétrique la masse de l'échantillon de produit à épandre déversé dans le caisson de pesée ;
**caractérisé par** les étapes suivantes :
(a) le déversement d'un échantillon de produit à épandre dans le caisson de pesée (21) du dispositif de pesée (20) ;
(b) la détection par voie de capteurs du volume de l'échantillon de produit à épandre déversé dans le caisson de pesée (21) du dispositif de pesée (20) ;
(c) la détermination gravimétrique de la masse de l'échantillon de produit à épandre déversé dans le caisson de pesée à l'aide du dispositif de pesée (20) ;
(d) la détermination du poids spécifique du produit à épandre d'une part à partir du volume déterminé par voie de capteurs de l'échantillon de produit à épandre dans le caisson de pesée (21), d'autre part à partir de la masse, déterminée de façon gravimétrique à l'aide du dispositif de pesée, de l'échantillon de produit à épandre déversé dans le caisson de pesée ; et
(e) la commande et/ou la régulation de la vitesse de rotation de la roue de dosage (18) de l'organe de dosage (17) à l'aide du dispositif de commande et/ou de régulation dans lequel au moins une valeur représentative du volume reçu et du nombre de cellules de dosage de la roue de dosage (18) est mémorisée, en fonction du débit massique théorique de produit à épandre déterminé à l'aide de la masse de produit à épandre par cellule de dosage ou par groupe de cellules de dosage de la roue de dosage (18), à l'aide du poids spécifique déterminé du produit à épandre.

7. Procédé selon la revendication 6, **caractérisé en ce qu'**une pluralité de valeurs sont mémorisées dans le dispositif de commande et/ou de régulation, lesdites valeurs étant représentatives du volume reçu et du nombre de cellules de dosage des différentes roues de dosage (18) de l'organe de dosage (17) comprenant une pluralité de roues de dosage (18) différentes pouvant être activées et désactivées, notamment individuellement et/ou en groupe, ou être remplacées les unes par les autres, dans lequel le dispositif de commande et/ou de régulation prend en compte la/les valeur(s) représentative(s) du volume reçu et du nombre de cellules de dosage de la roue de dosage (18)/des roues de dosage (18) se trouvant actuellement en fonctionnement lors de la commande et/ou de la régulation de la vitesse de rotation de la roue de dosage (18)/des roues de dosage (18) en fonction du débit massique théorique de produit à épandre.

8. Procédé selon la revendication 6 ou 7, **caractérisé en ce que** le produit à épandre est déversé à l'étape (a), notamment du fait de la gravitation, depuis l'ouverture de sortie (19) du réservoir (1) jusque dans le caisson de pesée (21) du dispositif de pesée (20).

9. Procédé selon l'une quelconque des revendications 6 à 8, **caractérisé en ce que** le produit à épandre est déversé du fait de la gravitation du caisson de pesée (21) du dispositif de pesée (20) jusque dans la roue de dosage (18) de l'organe de dosage (17).

10. Procédé selon l'une quelconque des revendications 6 à 9, **caractérisé en ce que** le produit à épandre est déversé à l'étape (a) depuis l'ouverture de sortie (19) du réservoir (1) jusque dans une admission du caisson de pesée (21) du dispositif de pesée (20), après quoi l'admission du caisson de pesée (21) est fermée, notamment à l'aide d'un coulisseau (23), après quoi le volume de l'échantillon de produit à épandre déversé dans le caisson de pesée (21) du dispositif de pesée (20) est détecté par voie de capteurs à l'étape (b) et sa masse est définie de façon gravimétrique à l'étape (c) à l'aide du dispositif de pesée (20).

11. Procédé selon l'une quelconque des revendications 6 à 10, **caractérisé en ce que** lors du fonctionnement de la machine à épandre, le caisson de pesée (21) du dispositif de pesée (20) est traversé par le produit à épandre déversé depuis l'ouverture de sortie (19) du réservoir (1), au niveau de l'organe de dosage (17).

12. Procédé selon l'une quelconque des revendications 6 à 11, **caractérisé en ce que** la détection par voie de capteurs du volume de l'échantillon de produit à épandre déversé jusque dans le caisson de pesée (21) du dispositif de pesée (20) s'effectue à l'étape (b) et que la détermination de façon gravimétrique de la masse de l'échantillon de produit à épandre déversé dans le caisson de pesée s'effectue pour l'essentiel simultanément à l'étape (c) à l'aide du dispositif de pesée. (20).

13. Procédé selon l'une quelconque des revendications 6 à 12, **caractérisé en ce que** :
- pour la détection par voie de capteurs du volume de l'échantillon de produit à épandre déversé dans le caisson de pesée (21) du dispositif de pesée (20) à l'étape (b), on détecte d'abord par voie de capteurs le volume vide et/ou le volume de remplissage du caisson de pesée (21), après quoi l'échantillon de produit à épandre est déversé dans le caisson de pesée (21) et le volume vide restant et/ou le volume de remplissage du caisson de pesée (21) rempli avec l'échantillon de produit à épandre est détecté par voie de capteurs, après quoi le volume de l'échantillon de produit à épandre est calculé à partir de la différence avec ce volume vide et/ou ce volume de remplissage du caisson de pesée (21) ; et/ou
- pour la détermination gravimétrique de la masse de l'échantillon de produit à épandre déversé dans le caisson de pesée à l'aide du dispositif de pesée (20) à l'étape (c), on pèse d'abord le caisson de pesée (21) à l'aide du dispositif de pesée (20), après quoi l'échantillon de produit à épandre est déversé dans le caisson de pesée (21) et le caisson de pesée (21) rempli de l'échantillon de produit à épandre est pesé à l'aide du dispositif de pesée (20), après quoi la masse de l'échantillon de produit à épandre est calculée à partir de la différence entre ces deux pesées.

14. Procédé selon l'une quelconque des revendications 6 à 13, **caractérisé en ce que** pour réétalonner l'organe de dosage (17), notamment à intervalles de temps périodiques, s'ajoutent les étapes suivantes :
(A) déversement d'un échantillon de produit à épandre dans le caisson de pesée (21) du dispositif de pesée (20) ;
(B) détermination de façon gravimétrique de la masse de l'échantillon de produit à épandre déversé dans le caisson de pesée (21) du dispositif de pesée (20) à l'aide du dispositif de pesée (20) ;
(C) rotation de la roue de dosage (18) de l'organe de dosage (17) pendant une durée d'étalonnage prédéfinie à une vitesse de rotation précédemment déterminée en correspondance avec le débit massique théorique de produit à épandre ;
(D) détermination de façon gravimétrique de la masse de produit à épandre restant dans le caisson de pesée (21) du dispositif de pesée (20) à l'aide du dispositif de pesée (20) ;
(E) à partir de la différence de ces masses de produit à épandre déterminées de façon gravimétrique par rapport à la durée d'étalonnage, calcul d'un débit massique réel de produit à épandre ;
(F) comparaison du débit massique réel ainsi calculé avec le débit massique théorique de produit à épandre ; et
(G) en cas d'écart du débit massique réel ainsi calculé de produit à épandre par rapport au débit massique théorique, commande et/ou régulation de la vitesse de rotation de la roue de dosage (18) pour atteindre le débit massique théorique de produit à épandre.

15. Procédé selon la revendication 14, **caractérisé en ce que** les étapes (A) à (G) sont répétées autant de fois que nécessaire pour que le débit massique réel ainsi calculé de produit à épandre corresponde au débit massique théorique ou ne s'écarte pas plus de ce dernier que d'une valeur maximale prédéterminée.
